# FASCICULE DE BREVET EUROPEEN

(11) **EP 2 849 878 B1**
(45) Date de publication et mention de la délivrance du brevet: **06.07.2016**
(21) Numéro de dépôt: 13737521.8
(22) Date de dépôt: 04.04.2013
(51) Int. Cl.: B01J 8/38

(54) **DISPOSITIF DE DISQUE ROTATIF DANS UN LIT FLUIDIFIÉ ROTATIF ET PROCÉDÉ UTILISANT CE DISPOSITIF**
ROTATIONSSCHEIBENVORRICHTUNG IN EINER WIRBELSCHICHT UND VERFAHREN UNTER VERWENDUNG DIESER VORRICHTUNG
ROTARY DISC DEVICE IN A ROTARY FLUIDISED BED AND METHOD USING SAID DEVICE

(30) Priorité: 15.05.2012 BE 201200322
(43) Date de publication de la demande: 25.03.2015
(73) Titulaire: De Broqueville, Axel, 1390 Grez-Doiceau (BE)
(72) Inventeur: De Broqueville, Axel, 1390 Grez-Doiceau (BE)
(74) Mandataire: Bounaga, Sakina
(86) Numéro de dépôt international: PCT/BE2013/000016
(87) Numéro de publication internationale: WO 2013/170321

(56) Documents cités:
- EP-A1- 2 127 738
- EP-A2- 0 544 289
- WO-A1-2008/011689

## Description

### Domaine technique de l'invention

La présente invention se rapporte aux dispositifs permettant d'obtenir des lits fluidifiés rotatifs à l'intérieur d'une chambre circulaire fixe et aux procédés de transformations de fluides et/ou de solides utilisant ces dispositifs.

### Arrière plan technologique de l'invention

L'obtention de lits fluidifiés rotatifs dans une chambre circulaire fixe, permettant, grâce à la force centrifuge, de faire traverser un lit dense de particules solides fluidifiés par une très grande quantité de fluides à l'aide de l'injection desdits fluides, à grande vitesse, tangentiellement à la paroi circulaire fixe délimitant la chambre circulaire, est connu. Voir la demande internationale de brevet WO-A-2005/099887 au nom du même inventeur.

Les résultats expérimentaux et par simulation montrent que les particules solides se mélangent rapidement, comme dans un réacteur agité. Les transferts de chaleur entre les particules solides du lit fluidifié rotatif et des fluides qui le traversent sont extrêmement rapides. Ceci permet de contrôler la température du lit fluidifié avec une bonne précision, même si l'interaction entre les fluides et les particules solides génèrent des réactions physiques ou chimiques fortement exo et/ou endothermiques.

Les lits fluidifiés rotatifs ont une épaisseur (dimension radiale) relativement petite et le débit des fluides qui traversent le lit fluidifié rotatif est très grand. Ceci permet un temps de contact très court, de l'ordre de quelques millisecondes, entre les fluides et les particules solides dans le lit fluidifié rotatif. L'exploitation de ce temps de contact très court est généralement favorisée par l'utilisation de particules solides très fines, de l'ordre de dizaines de microns, qui forment généralement des lits fluidifiés rotatifs instables et non homogènes, car les pertes d'énergie dues à la turbulence et à la friction contre les parois latérales augmentent rapidement lorsque la taille des particules diminue. Dans certains cas, il peut être nécessaire de refroidir les fluides dès qu'ils ont traversé le lit fluidifié rotatif, ce qui tend à augmenter les instabilités du lit fluidifié rotatif. L'alimentation des particules solides à l'intérieur de la chambre circulaire génère également des instabilités.

L'utilisation d'une cheminée rotative telle que décrite dans la demande de brevet PCT/EP2007/053941 déposée par TOTAL PETROCHEMICALS RESEARCH FELUY, le 23-04-2007, au nom du même inventeur permet d'améliorer la stabilité et la concentration du lit fluidifié rotatif. Elle permet également de refroidir les fluides dès qu'ils pénètrent dans la cheminée rotative. Toutefois la réalisation et l'utilisation d'une cheminée rotative est relativement complexe.

La présente invention permet d'obtenir des résultats semblables tout en étant de réalisation plus simple. Elle permet également d'améliorer les dispositifs d'alimentation de solides et/ou de liquides, d'assurer une bonne séparation entre différentes zones annulaires du lit fluidifié rotatif et des fluides qui ont traversé le lit fluidifié rotatif. Elle permet aussi de contrôler la circulation des solides entre ces différentes zones annulaires.

### Sommaire de l'invention

La présente invention se rapporte à un dispositif permettant d'obtenir un lit fluidifié rotatif à l'intérieur d'une chambre circulaire délimitée par une paroi circulaire (15) et des parois latérales fixes (13) et (14), comprenant :
- un dispositif d'injection de fluides (3), liquides et/ou gazeux, au travers de nombreuses ouvertures d'injection (16) réparties le long de la dite paroi circulaire, dans des directions principalement tangentielles à la dite paroi circulaire;
- un dispositif d'évacuation centrale des fluides (6), qui ont traversé le lit fluidifié rotatif, au travers d'une ou plusieurs ouvertures centrales de sortie (21.1) et 21.2) disposées autour ou à proximité de l'axe central (11) de la dite chambre circulaire;
- un dispositif d'alimentation de particules solides dans la chambre circulaire ;
- un dispositif d'évacuation de particules solides de la chambre circulaire, comprenant au moins une ouverture de sortie (30) située à une distance (31) de ladite paroi circulaire correspondant à l'épaisseur souhaitée du lit fluidifié rotatif ;
caractérisé en ce qu'il comprend :
- au moins un disque rotatif (1), dont l'axe de rotation est le long ou à proximité de l'axe central (11) de la chambre circulaire et dont le bord extérieur est à une distance (41) de ladite paroi circulaire inférieure à l'épaisseur souhaitée (31) du lit fluidifié rotatif lorsque le dispositif est en fonctionnement ;
- un dispositif (12) permettant de faire tourner ledit disque rotatif dans le même sens et à une vitesse plus rapide que ledit lit fluidifié rotatif.

Ce dispositif permet d'augmenter la vitesse de rotation du lit fluidifié rotatif grâce à la friction entre le disque et le lit fluidifié rotatif. Cette friction étant relativement faible, surtout si le disque rotatif est lisse, le disque rotatif peut tourner beaucoup plus vite que le lit fluidifié rotatif. Cela permet d'augmenter également la vitesse de rotation des fluides (6) qui ont traversé le lit fluidifié rotatif et qui traversent en tournant la zone centrale libre, contenant peu de particules solides, et ainsi de favoriser la formation dans cette zone centrale libre d'un tourbillon libre qui repousse les particules solides qui auraient été entraînées par lesdits fluides (6), qui sont évacués par lesdites ouvertures centrales de sortie.

Pour obtenir un lit fluidifié rotatif stable et dense, il est nécessaire que la force centrifuge soit significativement supérieure à la force d'entrainement des fluides. La première force est proportionnelle au carré de la vitesse tangentielle de rotation des particules solides, au cube de leur diamètre et à leur densité et inversement proportionnelle au rayon de la chambre circulaire. La deuxième force est proportionnelle au carré de la vitesse radiale des fluides au travers du lit fluidifié rotatif, au carré du diamètre des particules solides et à la densité des fluides.

Le disque rotatif peut augmenter la vitesse de rotation du lit fluidifié rotatif jusqu'au niveau nécessaire à l'obtention d'un lit rotatif dense et stable, en augmentant, si nécessaire, la friction entre le disque rotatif et le lit fluidifié rotatif, par exemple en modifiant le bord ou la surface à proximité du bord du disque rotatif à l'aide de dents, de protubérances ou d'ailettes.

Suivant un mode particulier de l'invention le bord extérieur du disque rotatif ou au moins une partie de la surface du disque rotatif, qui est en contact avec le lit fluidifié rotatif lorsque le dispositif est en fonctionnement, comprend des dents ou des protubérances ou des ailettes qui augmentent la friction entre le disque rotatif et le lit fluidifié.

Suivant ce mode particulier de l'invention lesdites dents, protubérances ou ailettes et/ou ladite partie de la surface du disque rotatif sont profilées de manière à pousser les particules solides dans la direction longitudinale souhaitée, lorsque le disque rotatif tourne plus vite que le lit fluidifié rotatif.

Toutefois les contraintes techniques et/ou les contraintes du procédé utilisant ce dispositif peuvent limiter ce transfert de moment cinétique de rotation du disque vers le lit fluidifié rotatif. Il est donc souhaitable d'optimiser la vitesse de rotation du lit fluidifié rotatif à l'aide des fluides qui sont injectés dans le lit fluidifié rotatif.

L'analyse des résultats expérimentaux permet de déduire pragmatiquement les relations souhaitées entre les différentes dimensions du dispositif d'alimentation des fluides, afin d'aider le ou les disques rotatifs à obtenir des lits fluidifiés rotatifs relativement denses, stables et homogène.

Suivant un mode particulier de l'invention, le carré du rapport entre la surface de la paroi circulaire (15) et la somme des surfaces desdites ouvertures d'injection (16) est supérieur à 200 fois et de préférence à 400 fois le rapport entre le diamètre de la chambre circulaire, D, et le diamètre moyen des particules solides, d, multiplié par le rapport entre la densité du fluide, pf, et la densité des solides, ps.

Lorsque lesdites ouvertures d'injection de fluides sont des fentes traversant longitudinalement la surface circulaire, le rapport des surfaces est égal au rapport de la distance, di, (96) entre les fentes d'injection des fluides et l'épaisseur, εi, (95) des fentes d'injections.

Suivant un mode particulier de l'invention, lesdites ouvertures d'injection des fluides sont des fentes traversant longitudinalement ladite paroi circulaire et le carré du rapport entre la distance moyenne, di, (96) séparant lesdites fentes d'injection et l'épaisseur moyenne, εi, (95) desdites fentes est supérieur à 200 fois et de préférence 400 fois le rapport entre le diamètre moyen de ladite chambre circulaire, D, et le diamètre moyen desdites particules solides, d, multiplié par le rapport entre la densité moyenne desdits fluides, pf, et la densité desdits solides, ps, soit :
(di / εi)² > 200. (D/d) . (pf / ps) et de préférence (di / εi)² > 400. (D/d) . (pf / ps).

Les expériences et les simulations ont montré qu'il est souhaitable que la distance, di, entre lesdites fentes soit petite par rapport au diamètre moyen, D, de la chambre circulaire, afin d'obtenir un lit fluidifié rotatif stable et homogène.

Suivant un mode particulier de l'invention, la distance moyenne (96), di, entre les ouvertures d'injection des fluides au travers de la paroi circulaire est inférieure au dixième et de préférence au vingtième du diamètre moyen, D, de la dite paroi circulaire.

Lorsque les ouvertures d'injection sont des fentes, la distance, di, entre les fentes est égal à la circonférence moyenne de la chambre circulaire divisée par le nombre de fentes. Il est donc souhaitable que le nombre de fentes soit supérieur à 31 et de préférence supérieur à 62.

De nombreuses expériences ont aussi montré que la stabilité, l'homogénéité et la densité des lits fluidifiés rotatifs nécessite un débit massique horaire minimum des fluides traversant le lit fluidifié rotatif, de préférence supérieur à plusieurs centaines de fois la masse du lit fluidifié rotatif. Les expériences ont montré que l'utilisation d'un disque rotatif permet de réduire le débit de fluide nécessaire à obtention d'un lit fluidifié rotatif stable et dense. Toutefois un débit massique horaire des fluides traversant le lit fluidifié rotatif de plusieurs centaines de fois supérieur à la masse du lit fluidifié rotatif reste souhaitable.

Suivant un mode particulier de l'invention, le débit horaire massique des fluides injectés au travers de la paroi circulaire est supérieur à 200 fois et de préférence supérieur à 400 fois la masse dudit lit fluidifié rotatif.

Lorsque le dispositif est en fonctionnement, le lit fluidifié rotatif tourne à l'intérieur d'une zone annulaire (A). Il est séparé par la force centrifuge d'une zone centrale libre (A'), ne contenant que peu de particules solides et où les fluides (6), qui ont traversé le lit fluidifié rotatif, forment un tourbillon libre avant d'être évacués par les ouvertures centrales de sortie. La force centrifuge de ce tourbillon libre permet de réduire les pertes de particules solides qui sont entraînées par ces fluides (6) en les refoulant vers le lit fluidifié rotatif. Le tourbillon libre améliore aussi la stabilité du lit fluidifié rotatif. Toutefois ce tourbillon libre est très vite perturbé si on y alimente des particules solides ou des microgouttelettes d'un liquide lorsque le fluide (6) est un gaz, par exemple pour le refroidir.

Suivant un mode particulier de l'invention, un tube central (20.1) ou à proximité de l'axe central (11), peut injecter ou pulvériser un liquide (2.1) sur au moins une face du disque rotatif qui a une saillie circulaire (83), à proximité de la surface de séparation (17) du lit fluidifié rotatif et de la zone centrale libre, à l'intérieur de ladite zone centrale libre qui est traversée par un gaz. Suivant ce mode particulier de l'invention, ladite saillie circulaire est profilée de manière à disperser dans ladite zone centrale libre, sous la forme de microgouttelettes, ledit liquide qui s'écoule sous l'effet de la force centrifuge, en film mince (9), le long de la surface du disque rotatif, lorsque le dispositif est en fonctionnement. Le disque rotatif pouvant tourner à très grande vitesse, les microgouttelettes peuvent pénétrer dans la zone centrale libre sans diminuer la force du tourbillon libre. L'évaporation de ces microgouttelettes peut refroidir brutalement le gaz (6) quelques millisecondes après avoir traversé le lit fluidifié rotatif.

Suivant un autre mode particulier de l'invention, le tube central (20.1) traversant le côté (14) par où les fluides (6) sont évacués centralement sous la forme gazeuse, est relié à un disque creux (29) permettant d'injecter ou de pulvériser un liquide (2.1) sur la surface circulaire libre (17) du lit fluidifié rotatif. L'injection ou la pulvérisation de ce liquide (2.1) se fait de préférence à proximité du disque rotatif (1) et dans une direction tangentielle afin de minimiser la perturbation du tourbillon libre. Ledit disque creux (29) peut également être rotatif. Ce dispositif peut être utilisé, par exemple, pour l'imprégnation ou l'enrobage de particules solides.

Les dispositifs permettant d'obtenir un lit fluidifié rotatif dans une chambre circulaire fixe peuvent être classés en deux familles suivant que les fluides sont évacués centralement d'un seul côté ou des deux côtés de la chambre circulaire.

Suivant un premier mode particulier de l'invention, les fluides qui ont traversé le lit fluidifié rotatif sont évacués centralement d'un seul côté (14).

Suivant ce premier mode particulier de l'invention, ledit disque rotatif est placé à proximité de la paroi latérale (13) du côté opposé audit seul côté (14). Sa rotation rapide empêche les particules solides de pénétrer dans la zone morte du tourbillon libre, à proximité de l'axe central, par où elles seraient entraînées par les fluides vers la sortie. Sa rotation rapide augmente aussi la vitesse de rotation du lit fluidifié rotatif à proximité du dit disque rotatif, ce qui y augmente la force centrifuge et donc la pression du lit fluidifié rotatif sur la paroi circulaire le long dudit côté opposé. Cette pression pousse les particules solides fluidifiées vers le côté où sont la ou les sorties centrales des fluides. Les particules solides sont ralenties par la friction sur ce côté qui est fixe. La force centrifuge diminue de ce côté et l'accumulation des particules solides provenant dudit côté opposé augmente l'épaisseur du lit fluidifié de ce côté. La surface de séparation entre le lit fluidifié rotatif et la zone centrale libre forme une pente le long de laquelle les particules solides retournent vers le dit côté opposé. La présence du disque rotatif à proximité d'un des côtés génère donc une circulation longitudinale des particules solides en suspension dans le lit fluidifié rotatif. Cette circulation longitudinale des particules solides améliore l'uniformité du lit fluidifié rotatif et génère un transfert de moment cinétique de rotation entre les deux côtés. Le disque rotatif permet donc d'augmenter la vitesse de rotation de l'ensemble du lit fluidifié rotatif, ce qui améliore sa densité et sa stabilité.

Les expériences et les simulations ont montré que l'alimentation des particules solides dans le lit fluidifié rotatif est une source d'instabilités. Suivant ledit premier mode particulier de l'invention, l'alimentation des particules solides se fait de préférence au travers dudit côté opposé, dans l'espace entre le disque rotatif et ledit côté opposé. Les particules solides doivent donc longer le disque rotatif avant de pouvoir pénétrer dans le lit fluidifié rotatif par l'espace situé entre le disque rotatif et la paroi circulaire. La friction contre le disque rotatif permet de leur donner une vitesse de rotation comparable ou supérieure à celle du lit fluidifié rotatif tout en les répartissant relativement uniformément. Leur pénétration dans le lit fluidifié rotatif peut se faire avec un minimum de perturbation et même augmenter sa vitesse de rotation, ce qui améliore sa stabilité. Les particules solides sont de préférence entraînées par un fluide (2) au travers d'un ou de préférence plusieurs tubes (20), de préférence à proximité de l'axe central (11), afin de minimiser les forces dissymétriques qui pourraient s'exercer sur le disque rotatif et le faire vibrer.

Suivant un mode particulier dudit premier mode particulier de l'invention, les fluides injectés par les ouvertures d'injection au travers de la paroi circulaire, à proximité du bord du disque rotatif, sont des gaz (3.1) et un liquide (2) contenant des solides en solution ou en suspension, est injecté ou dispersé au travers d'un tube (20) sur le disque rotatif (1), où il forme un film mince (8) sous l'effet de la force centrifuge, lorsque le dispositif est en fonctionnement. Ledit liquide (2) est éjecté le long de l'arête (60) du bord extérieur (61) du disque rotatif, sous la forme de microgouttelettes qui sont d'autant plus petites que le disque tourne vite et que son arête (60) forme un angle aigu (tranchant).

Suivant ce mode particulier de l'invention, le disque rotatif a de préférence un bord extérieur (61) relativement large. Ce bord extérieur (61) délimite un espace annulaire (62) entre la paroi circulaire et ledit bord extérieur (61). Le dispositif d'injection des fluides permet d'injecter des gaz très chauds dans cet espace annulaire au travers de la paroi circulaire afin d'évaporer en un temps très court, de l'ordre de quelques millisecondes, la couche superficielle des microgouttelettes, qui se transforment en particules solides qui sont entraînées par ces gaz vers le lit fluidifié rotatif, qui est traversé par des gaz de préférence moins chauds, afin d'achever le séchage des solides contenus dans ces gouttelettes. Ce dispositif permet donc la fabrication de poudres très fines et sèches à partir de solides en solution ou en suspension dans un liquide. La solidification des microgouttelettes peut aussi être obtenue par des réactions chimiques, par exemple de polymérisation, au contact des gaz traversant le lit fluidifié rotatif.

Suivant un autre mode particulier dudit premier mode particulier de l'invention, le disque rotatif (1) est fixé à un deuxième disque (1.2), à une certaine distance (56) l'un de l'autre. Ledit deuxième disque (1.2) est percé d'une ouverture centrale (26) par où peuvent s'échapper une partie des gaz (3.1) injectés au travers de la paroi circulaire (15) en face de l'espace séparant les deux disques rotatifs. Les particules solides (2) alimentées par le tube (20) dans l'espace entre le disque rotatif (1) et ledit côté opposé (13) sont poussées par la force centrifuge vers la zone annulaire (B) comprise entre les deux disques rotatifs où elles forment un lit fluidifié rotatif entraîné par les deux disques rotatifs et donc pouvant tourner très vite et donc très dense. Elles sont ensuite transférées vers la zone annulaire (A), traversée par un gaz (3.2), entre le deuxième disque (1.2) et la paroi latéral fixe (14) où elles forment un lit fluidifié rotatif moins dense, car il est ralenti par le frottement contre le côté latéral fixe (14) par où sont évacués centralement les gaz.

Suivant ce mode particulier de l'invention, un tube central (20.1,) traversant le côté (14) par où les fluides sont évacués et traversant l'ouverture centrale (26) dudit deuxième disque (1.2), permet d'injecter ou de pulvériser un liquide (2.1) sur la surface du premier disque rotatif (1), située du côté dudit deuxième disque (1.2). Ce liquide forme, sous l'effet de la force centrifuge, un film mince (9) qui pénètre dans le lit fluidifié rotatif de la zone annulaire (B) où il mouille les particules solides. La très forte agitation des particules solides dans la zone B permet de répartir relativement uniformément le liquide à la surface des particules solides. Les particules solides sont ensuite séchées dans la zone annulaire (A). Ce dispositif permet donc d'enduire ou d'imprégner de manière relativement uniforme des particules solides de très petite dimension.

Suivant ce mode particulier de l'invention, le gaz (3.1) est de préférence relativement froid pour ne pas sécher les particules solides qui doivent céder leur excès de liquide aux autres particules et le gaz (3.2) est relativement chaud pour sécher rapidement les particules solides qui tournent dans la zone annulaire (A) du lit fluidifié rotatif.

Suivant un deuxième mode particulier de l'invention, les fluides qui ont traversé le lit fluidifié rotatif sont évacués centralement des deux côtés latéraux de la chambre circulaire et le disque rotatif divise ladite chambre circulaire en deux zones circulaires séparées, situées de chaque côté dudit disque rotatif.

Sous l'effet de la force centrifuge qui est augmentée le long du disque rotatif, la circulation longitudinale du lit fluidifié rotatif dans chaque zone annulaire, se fait du disque rotatif vers les côtés le long de la paroi circulaire (15) et des côtés vers le disque rotatif le long de la surface de séparation (17). Les échanges de particules solides entre les deux zones dépendent de la distance (41) entre le bord du disque et la paroi circulaire.

Suivant un mode particulier dudit deuxième mode particulier de l'invention, le disque rotatif comprend des ouvertures (90) situées à une distance (42) de la paroi circulaire, inférieure à l'épaisseur souhaitée (31) du lit fluidifié rotatif dans chaque zone annulaire. Ceci permet de diriger la circulation de particules solides entre les deux zones, en fonction des différences de pression et de densité du lit rotatif dans les deux zones annulaires. Ces différences sont influencées par les débits, les densités et les vitesses d'injection des fluides dans chaque zone annulaire et par les pressions d'évacuation de ces fluides. Par exemple, la vitesse de rotation du lit fluidifié rotatif est normalement la plus grande dans une première zone annulaire où le débit, la densité et la vitesse d'injection des fluides sont les plus grands. La pression du lit fluidifié rotatif sur la paroi circulaire est dès lors plus grande dans ladite première zone annulaire. Dans ce cas, si les pressions des fluides le long des surfaces circulaires libres (17.1) et (17.2) sont contrôlées afin d'être approximativement égales, les particules solides vont de ladite première zone annulaire vers l'autre zone annulaire le long de l'a paroi circulaire et elles reviennent vers ladite première zone annulaire au travers des ouvertures (90).

Il n'est généralement pas facile de contrôler cette circulation. Suivant un mode préféré de l'invention, lesdites ouvertures (90) sont profilées, de préférence à l'aide de petites ailettes, afin de pousser ou aspirer les particules solides dans la direction souhaitées. Dans ce cas, la circulation des particules solides d'une zone annulaire à l'autre dépend de la différence de vitesse de rotation entre le disque rotatif et le lit fluidifié rotatif.

Suivant un autre mode particulier dudit deuxième mode particulier de l'invention, le bord extérieur du disque rotatif comprend des passages, comparables aux espaces séparant les dents (70) d'une roue dentée, et ces dents ou passages sont profilés de manière à favoriser le passage des particules solides d'une zone annulaire à l'autre dans la direction souhaitée. Ces dents ou passages peuvent être prolongés par des ailettes qui poussent ou aspirent les particules solides dans la direction souhaitée.

Ces différents modes particuliers dudit deuxième mode particulier de l'invention permettent de séparer les fluides (6.1) et (6.2) qui ont traversé le lit fluidifié rotatif des zones annulaires séparées, respectivement (A) et (B), tout en contrôlant le transfert des particules solides d'une zone vers l'autre. Ceci permet, par exemple, de contrôler la différence de température entre les deux zones annulaires, si l'une est traversée par des fluides chauds et/ou générant des réactions exothermiques et si l'autre zone annulaire est traversée par des fluides froids et/ou générant des réactions endothermiques.

Suivant un autre mode particulier dudit deuxième mode particulier de l'invention, le disque rotatif (1) est attaché à un deuxième disque rotatif (1.2) comprenant une ouverture centrale (26) au travers de laquelle une partie des fluides (3.1) injectés au travers de la paroi circulaire (15) en face de l'espace séparant les deux disques peut s'échapper vers l'ouverture de sortie (21.1). Un tube central (20.1) ou un tube (20) à proximité de l'axe central (11) permet d'alimenter au travers de ladite ouverture centrale (26) dans l'espace séparant les deux disques rotatifs un liquide (2.1) ou des particules solides (2) éventuellement entraînées par un fluide. La force centrifuge pousse lesdits liquides ou particules solides dans l'espace entre les deux disques vers la périphérie, où elles sont éjectées vers la paroi circulaire dans le lit fluidifié rotatif de la zone annulaire (A) ou (B). La forme de la périphérie des deux disques rotatifs peut être choisie afin de favoriser l'éjection des liquides ou des particules solides dans la direction longitudinale souhaitée.

Suivant un autre mode particulier dudit deuxième mode particulier de l'invention, le disque rotatif (1) est creux et il comprend des orifices (89) le long de sa périphérie. Un tube central (20.2) permet l'alimentation d'un fluide (2.4) au travers de l'arbre de rotation (11), à l'intérieur du disque rotatif creux. Ces fluides (2.4), pouvant entraîner des particules solides ou contenir des solides en solution, sont éjectés par lesdits orifices (89) à l'intérieur du lit fluidifié rotatif dans la direction souhaitée.

La présente invention se rapporte également aux procédés de transformation de particules solides comme le séchage, l'extraction de volatiles, l'enrobage, l'imprégnation, l'enduisage, la torréfaction, la pyrolyse et la gazéification de bio particules ou autres particules solides ou liquides réagissant au contact des fluides traversant le lit fluidifié rotatif ainsi qu'aux procédés de transformation de fluides traversant le lit fluidifié rotatif et réagissant au contact des particules solides en suspension dans le lit fluidifié rotatif utilisant ce dispositif. Lesdites particules solides peuvent être, au moins en partie, des catalyseurs favorisant la dite transformation. La présente invention se rapporte également aux procédés de fabrication de poudres à partir de microgouttelettes produites par ledit dispositif, au moyen de l'évaporation de liquides contenant des solides en solution ou en suspension ou de réaction chimiques, comme la polymérisation desdites microgouttelettes.

Lorsque ces transformations nécessitent un apport de calories ou de frigories, le lit fluidifié rotatif peut être traversé par un fluide qui a été chauffé ou refroidi à l'extérieur de la chambre circulaire. Par exemple la polymérisation catalytique de l'éthylène est une réaction très exothermique. L'éthylène qui traverse en quelques millisecondes le lit fluidifié rotatif contenant les particules catalytiques peut être recyclé après avoir été refroidi.

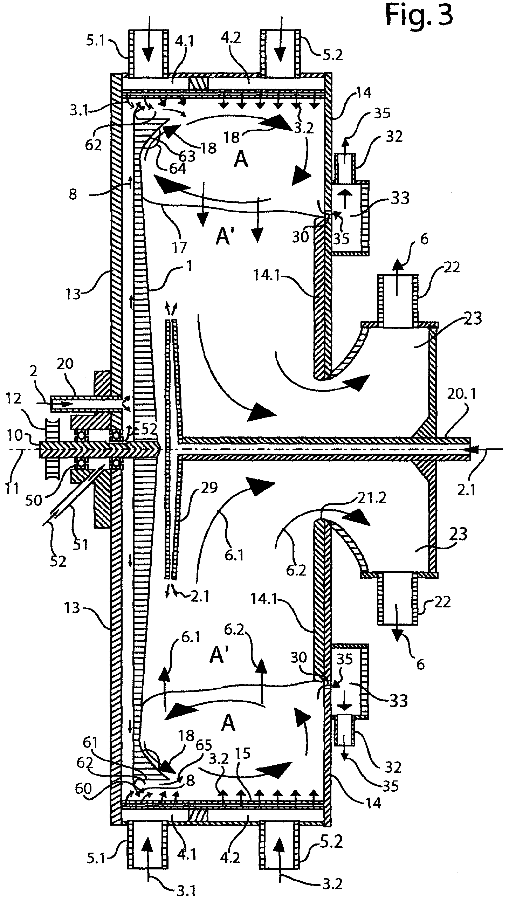

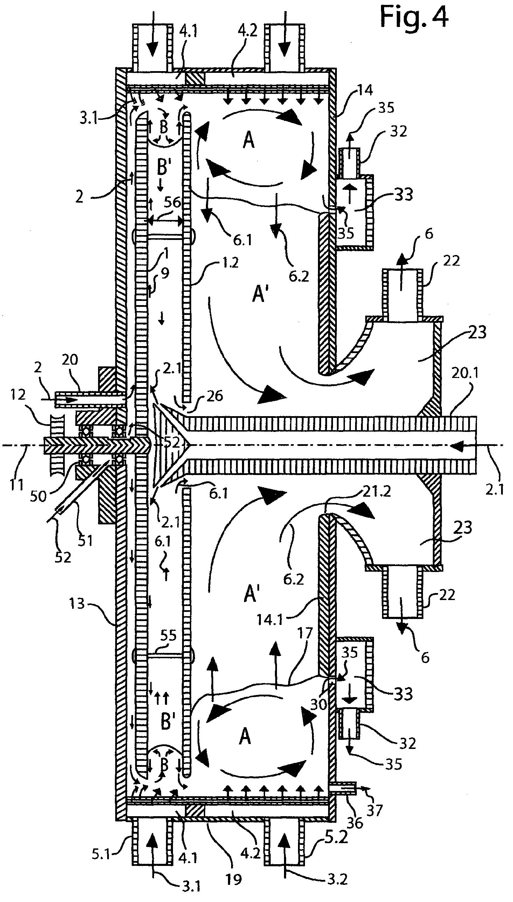

Cet apport de calories peut se faire à des températures différentes, dans différentes zones annulaires du lit fluidifié rotatif. Par exemple l'utilisation d'un double disque rotatif, comme décrit dans la figure 4 ou d'un disque rotatif dont le côté extérieur est élargi, comme décrit dans la figure 3, permet de délimiter une zone annulaire entre le ou les disques rotatifs et la paroi circulaire (15). Cette zone annulaire peut être traversée par un gaz très chaud, par exemple pour évaporer très rapidement l'humidité superficielle de particules solides ou de microgouttelettes contenant des solides dissouts. Un séchage plus progressif peut se poursuivre dans la partie du lit fluidifié rotatif qui est traversée par un gaz moins chaud. Inversement un gaz froid peut traverser cette zone annulaire afin de préserver et d'uniformiser la répartition du liquide dont on enduit les particules solides circulant dans cette zone annulaire, le séchage de ces particules solides se faisant dans la partie du lit fluidifié rotatif traversée par un gaz chaud.

L'apport des calories ou des frigories peut également se faire à l'aide de la circulation des particules solides entre deux zones annulaires, séparées par le ou les disques rotatifs, l'une des zones ayant une réaction exothermique et l'autre zone ayant une réaction endothermique.

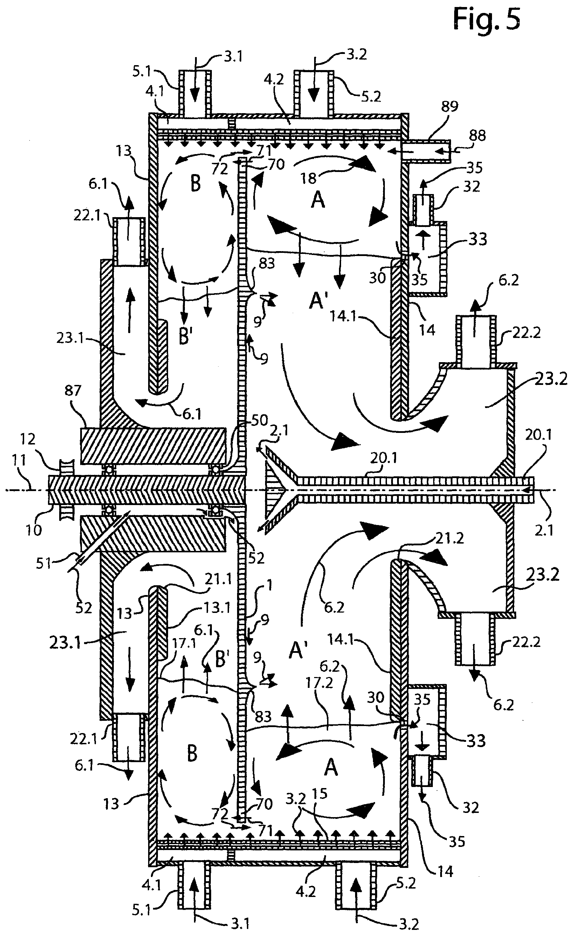

Par exemple la pyrolyse de particules solides carbonées peut se faire dans une zone annulaire (B) du lit fluidifié rotatif, tandis que la combustion partielle du carbone résiduel de ces particules peut se faire dans une zone annulaire (A), les deux zones étant séparées par un ou plusieurs disques rotatifs. Le transfert des particules solides de la zone annulaire (A) vers la zone annulaire (B) apporte les calories nécessaires à la pyrolyse et le transfert des particules solides de la zone annulaire (B) vers la zone annulaire (A) apporte les matières combustibles nécessaires à la production de chaleur par leur combustion. Un dispositif semblable à ceux qui sont décrits par les figures 5 à 7 peut convenir pour cette application.

De tels dispositifs peuvent être utilisés pour la transformation de fluides traversant le lit fluidifié rotatif. Par exemple le craquage catalytique et/ou thermique d'hydrocarbures peut se faire dans une zone annulaire (A) du lit fluidifié rotatif, dans laquelle les hydrocarbures sont alimentés, sous la forme gazeuse ou liquide, et le carbone résiduel qui se dépose sur les particules solides peut être brûlé dans la zone annulaire (B). La zone annulaire (B) peut aussi être chauffée par la combustion de gaz injectés au travers de la paroi circulaire, par exemple de l'hydrogène et de l'oxygène. Les hydrocarbures qui ont été transformés en traversant le lit fluidifié rotatif peuvent être refroidis brutalement par la pulvérisation de fines gouttelettes d'eau dans la zone centrale (A') à l'aide du disque rotatif muni d'une saillie profilée adéquatement.

L'utilisation d'un ou plusieurs disques rotatifs présente donc de nombreux avantages :
Ils augmentent la vitesse de rotation du lit fluidifié rotatif et donc sa densité et sa stabilité. Ils augmentent aussi la vitesse de rotation des fluides dans la zone centrale libre et favorisent la formation d'un tourbillon libre puissant qui permet de réduire les pertes de solides entraînés par les fluides qui ont traversés le lit fluidifié rotatif et d'améliorer ainsi la séparation des fluides et des solides le long de la surface (ou zone mince) qui sépare le lit fluidifié rotatif de la zone centrale libre. Ils permettent d'alimenter les particules solides à l'intérieur du lit fluidifié rotatif sans le perturber significativement et donc sans générer d'instabilités. Ils permettent également de refroidir les gaz de la zone libre en utilisant le disque rotatif pour y pulvériser des microgouttelettes de liquides de refroidissement sans perturber significativement le tourbillon libre et ainsi de refroidir ces gaz, quelques millisecondes après avoir été transformé en traversant le lit fluidifié rotatif. Ils permettent également de séparer les fluides qui ont traversé les zones annulaires du lit fluidifié rotatif situées de part et d'autre du ou des disques. Si le disque rotatif est équipé de passages ou d'ouvertures adéquatement profilés et éventuellement équipés d'ailettes de guidage, il permet de contrôler les échanges de particules solides et donc le transfert de calories d'une zone annulaire à l'autre. Ils sont aussi particulièrement utiles pour fabriquer des microparticules solides à partir de microgouttelettes et pour enduire ou imprégner ou enrober des microparticules solides.

### Brève description des dessins

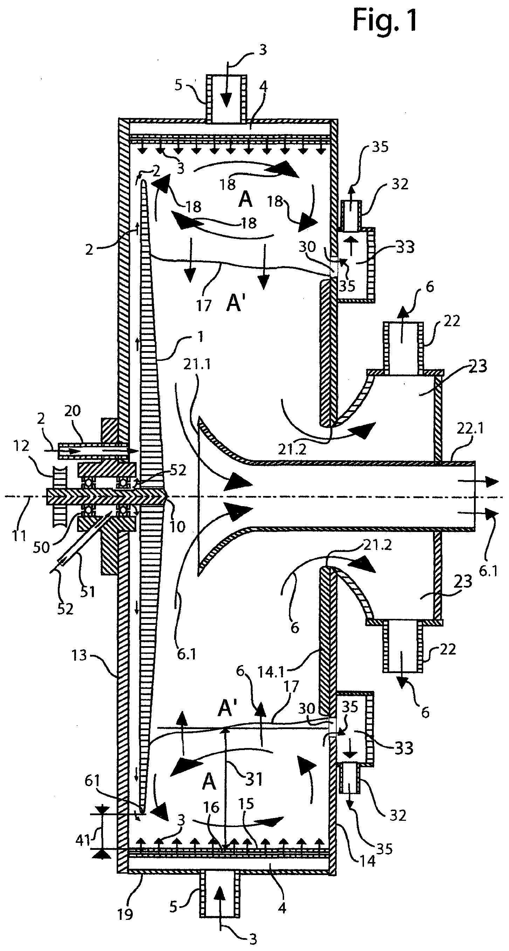

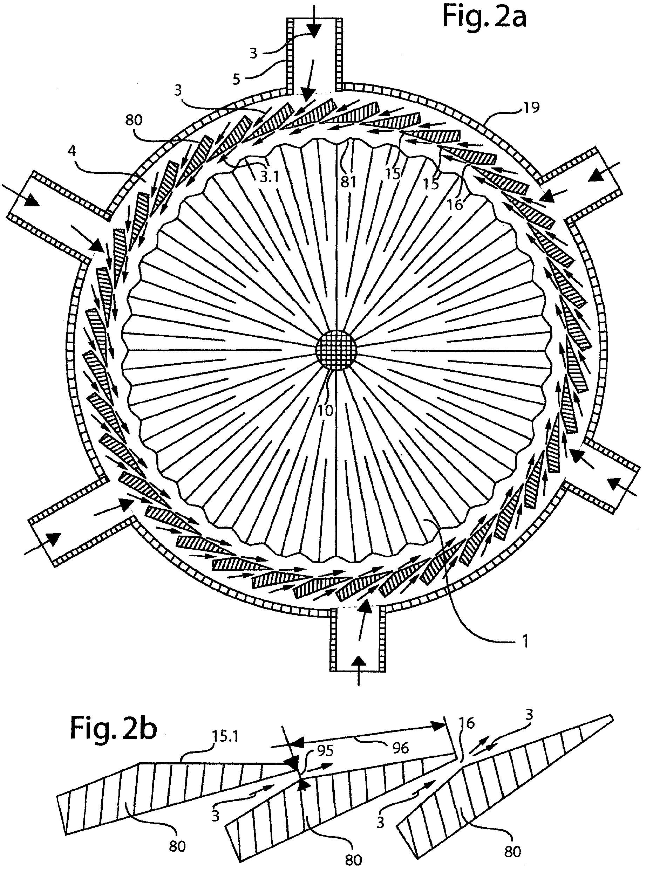

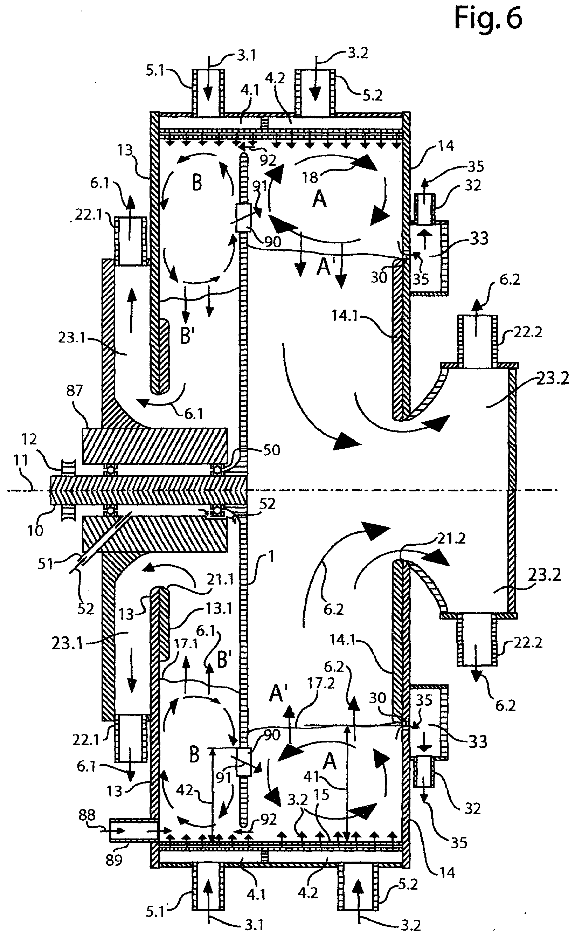

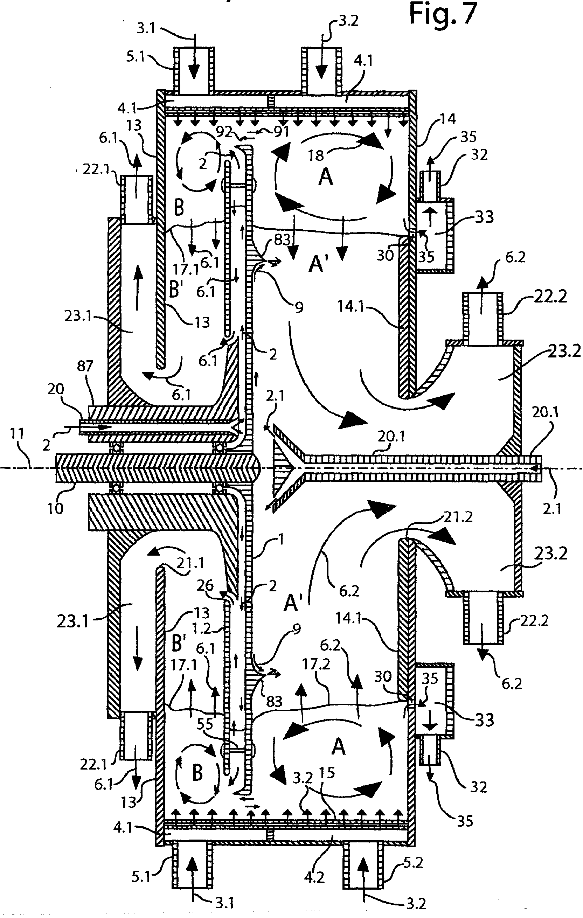

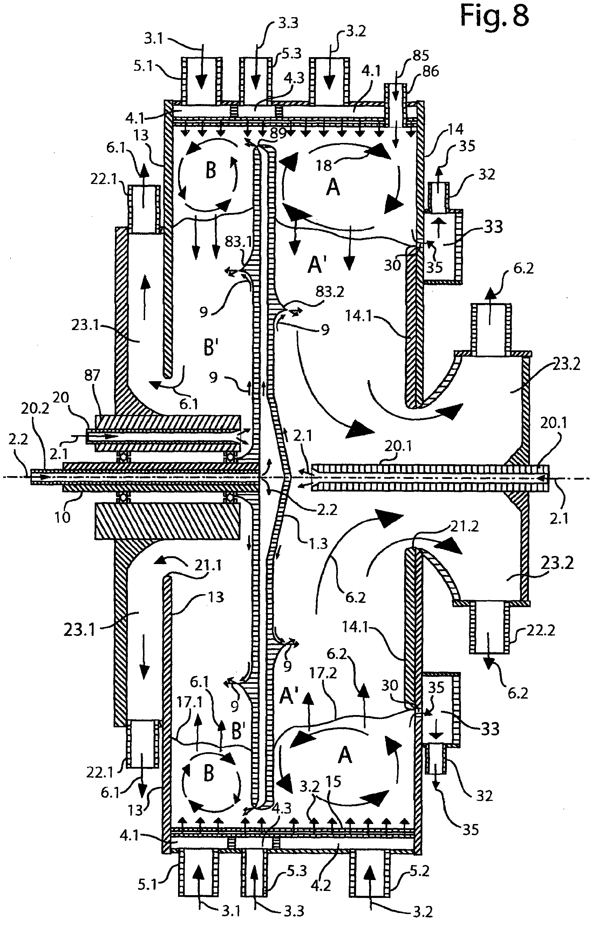

**La** **figure 1** montre la section longitudinale d'un exemple de dispositif permettant d'obtenir un lit fluidifié rotatif à l'intérieur d'une chambre circulaire fixe avec une évacuation centrale des fluides ayant traversé le lit fluidifié rotatif au travers d'un des deux côtés de la chambre circulaire et un disque rotatif situé à proximité du côté opposé.
**La** **figure 2a** montre un exemple de section transversale du dispositif de la figure 1 au travers du disque rotatif.
**La** **figure 2b** montre un agrandissement de la section transversale de 3 plaquettes (80) formant la paroi circulaire (15).
**La** **figure 3** montre la section longitudinale d'un dispositif semblable au dispositif de la figure 1, où le dispositif d'alimentation des fluides au travers de la paroi circulaire permet d'alimenter des fluides différents ou à des températures différentes au travers de deux zones annulaires de la paroi circulaire fixe, avec un dispositif central de pulvérisation d'un liquide (2.2) à l'intérieure de la zone annulaire libre A' et avec un disque rotatif dont la forme de la périphérie a été modifiée.
**La** **figure 4** montre la section longitudinale d'un dispositif semblable au dispositif de la figure 3, avec un double disque rotatif (1.1) et (1.2)
**La** **figure 5** montre la section longitudinale d'un exemple de dispositif permettant d'obtenir un lit fluidifié rotatif à l'intérieur d'une chambre circulaire fixe avec une évacuation centrale des fluides ayant traversé le lit fluidifié rotatif au travers des deux côtés opposés de ladite chambre circulaire fixe et un disque rotatif (1) situé entre lesdits côtés opposés, séparant la chambre circulaire en deux zones annulaires.
**La** **figure 6** montre la section longitudinale d'un dispositif semblable au dispositif de la figure 5, avec un disque rotatif comprenant des ouvertures (90) permettant le transfert de particules solides d'une zone à l'autre.
**La** **figure 7** montre la section longitudinale d'un dispositif semblable au dispositif de la figure 5, avec un double disque rotatif
**La** **figure 8** montre la section longitudinale d'un exemple de dispositif semblable à celui de la figure 5 avec un disque rotatif creux ou un double disque rotatif alimenté centralement au travers de l'arbre de rotation du disque rotatif.

### Définitions

Par « paroi circulaire » on entend une paroi entourant un axe central, de forme généralement à symétrie cylindrique, mais dont la surface peut être polygonale et/ou avoir différentes courbures, par exemple concaves et/ou convexes, et dont les sections transversales peuvent avoir différentes dimensions et formes. Par exemple la paroi circulaire peut avoir la forme de la surface polygonale à symétrie cylindrique d'un tronc de cône.

Par « surface circulaire libre du lit fluidifié rotatif », on entend la zone circulaire de séparation entre le lit fluidifié rotatif, où la concentration des particules solides est élevée, et la zone centrale libre, où la concentration des particules solides est très petite. Lorsque le lit fluidifié rotatif est relativement stable et dense, la séparation entre les fluides qui ont traversé le lit fluidifié rotatif et les particules solides se fait très rapidement et la zone circulaire de séparation des fluides et des solides est relativement mince et assimilée à une surface circulaire.

Le mot « fluide » est utilisé lorsque le fluide peut être à l'état liquide ou gazeux ou un mélange des deux états. Le mot « gaz » est utilisé lorsque le fluide est à l'état gazeux et le mot « liquide » est utilisé lorsque le fluide est à l'état liquide.

Le mot « injecter » se rapporte à une alimentation de fluide au travers d'ouvertures de préférence petites ou étroites. Le mot « pulvériser » se rapporte à l'alimentation d'un liquide sous la forme de fines gouttelettes. Le mot « alimenter » est général. Il inclut injecter et pulvériser.

### Description détaillée

Les figures de 1, 3 et 4 se rapporte au mode particulier de l'invention où les fluides qui ont traversé le lit fluidifié rotatif sont évacués centralement au travers d'une des deux parois latérales de la chambre circulaire, avec différents exemples pour illustrer différents modes de l'invention. Les figures de 5 à 8 illustrent le mode particulier de l'invention où les fluides ayant traversé le lit fluidifié rotatif sont évacués centralement au travers des deux parois latérales de la chambre circulaire, avec d'autres exemples. La figure 2 se rapporte indifféremment aux deux modes particuliers de l'invention.

**La** **figure 1** montre la section longitudinale crut exemple de dispositif permettant d'obtenir un lit fluidifié rotatif traversé par des fluides qui sont évacués centralement du même côté latéral (14). Ce dispositif comprend une chambre circulaire, délimitée par 2 parois latérales (13) et (14) et par une paroi circulaire (15) traversée par un grand nombre d'ouvertures, par exemple des fentes (16) permettant d'injecter un ou plusieurs fluides (3) dans une direction principalement tangentielle à ladite paroi circulaire. Dans cet exemple, les parois latérales sont planes. Elles pourraient avoir une autre forme, par exemple une courbure concave ou convexe. Le diamètre de la chambre circulaire est constant. Il pourrait avoir différentes dimensions.

Le dispositif d'alimentation des fluides (3) comprend un ensemble de tubes (5) pour alimenter les fluides (3) dans une chambre d'alimentation (4) entourant la paroi circulaire (15), à l'intérieure de la paroi extérieure (19) entourant la paroi circulaire.

Le dispositif d'évacuation centrale des fluides (6) et (6.1), qui ont traversé le lit fluidifié rotatif, comprend, dans cet exemple, une ouverture centrale de sortie (21.1) connectée à un tube (22.1) autour de l'axe central (11) pour évacuer les fluides (6.1) qui ont traversé le lit fluidifié rotatif et la zone centrale libre à proximité du disque rotatif et une deuxième ouverture centrale de sortie (21.2) autour du tube (22.1) pour évacuer les fluides (6) au travers d'un espace annulaire (23) par un ensemble de tubes d'évacuation (22).

Le dispositif d'alimentation de solides (2) comprend, dans cet exemple, au moins un tube d'alimentation (20) situé du côté (13) du disque rotatif, à proximité de l'axe central (11). Les solides peuvent, par exemple, être alimentés par une vis hélicoïdale et/ou entraînés par un fluide ou en solution dans un fluide.

Le dispositif d'évacuation des particules solides comprend un ensemble d'ouvertures de sortie (30) au travers de la paroi latérale (14) à la distance (31) de la paroi circulaire correspondant à l'épaisseur souhaitée du lit fluidifié rotatif lorsque le dispositif est en fonctionnement. Dans cet exempte, ces ouvertures de sortie sont connectées à un ensemble de tubes (32) d'évacuation des solides au travers d'une chambre annulaire (33). Une paroi annulaire latérale (14.1) constitue un obstacle pour les particules solides qui sont entraînées par les fluides vers l'axe central, le long de la paroi latérale (14). Elle favorise donc l'accumulation des particules solides devant les ouvertures (30) de sortie des solides et défavorise les pertes de solides dues à leur entraînement par les fluides vers la sortie centrale le long de la paroi latérale où la vitesse de rotation et donc la force centrifuge est la plus faible.

Le disque rotatif (1), situé à proximité du côté latéral (13) opposé au côté latéral (14), est fixé sur un arbre rotatif (10), situé le long ou à proximité de l'axe central (11), connecté à un moteur, symbolisé par une poulie (12), pour faire tourner le disque rotatif. Le diamètre du disque rotatif (1) est suffisamment grand pour que la distance (41) entre le bord extérieur du disque rotatif et la paroi circulaire (15) soit Inférieure à l'épaisseur souhaitée (31) du lit fluidifié rotatif lorsque le dispositif est en fonctionnement. La zone circulaire de séparation entre le lit fluidifié rotatif (A) et la zone centrale libre (A)' est représentée par la surface circulaire libre, d'ont la section est symbolisée par la ligne ondulée (17).

Dans cet exemple, l'arbre de rotation (10) est maintenu par des roulements à billes (50). Un tube (51) permet l'injection d'un fluide (52) entre les roulements à bille, pour qu'il pénètre dans l'espace central entre le côté latéral (13) et le disque rotatif (1) au travers d'une ouverture entre l'arbre de rotation et le roulement proche du disque rotatif, afin d'empêcher les particules solides de s'approcher des roulements a billes. Ce dispositif réduit significativement l'usure des roulements à billes et permet leur refroidissement, si nécessaire.

Lorsque le dispositif est en fonctionnement, les fluides (3) sont injectés tangentiellement dans les fentes (16), au travers de la paroi circulaire (15). Ils font tourner les particules solides qui forment un lit fluidifié rotatif (A), tournant le long de la paroi circulaire autour de l'axe central (11). Le lit fluidifié rotatif est délimité par la paroi circulaire (15) et par une surface circulaire libre (17) qui est la surface de séparation entre le lit fluidifié rotatif A et la zone centrale libre (A') qui ne contient que peu de particules solides. Après avoir traversé en tournant le lit fluidifié rotatif, les fluides (6.1) et (6) sont évacués centralement par les ouvertures de sortie (21.1) et (21.2).

L'épaisseur (31) du lit fluidifié rotatif dépend de la quantité de solides qu'il contient. Si l'alimentation des particules solides est continue, l'épaisseur du lit fluidifié rotatif augmente jusqu'à ce que sa surface libre (17) atteigne les ouvertures de sortie (30) des particules solides. Les particules solides (35), entraînées par du fluide, sont évacuées par les tubes (32) au travers de la chambre annulaire (33). La position des ouvertures de sortie (30) permet de contrôler l'épaisseur (31) du lit fluidifié rotatif.

Le disque rotatif (1) est entraîné par le dispositif de rotation symbolisé par une poulie (12) dans le même sens et à une vitesse de rotation supérieure à la vitesse de rotation désirée du lit fluidifié rotatif (A). Le frottement accélère la vitesse de rotation des fluides et des solides qui entrent en contact avec le disque rotatif. Le frottement contre le disque rotatif fait tourner également les solides (2), et les fluides qui entraînent les solides, alimentés par le tube (20). La force centrifuge les pousse vers la paroi circulaire (15) et ils pénètrent dans le lit fluidifié rotatif en ayant une vitesse de rotation comparable à la vitesse de rotation du lit fluidifié rotatif. La rotation du disque permet également de répartir relativement uniformément les fluides et les solides (2) le long de la périphérie du disque rotatif, pour que l'alimentation des solides ne génère pas d'instabilités dans le lit fluidifié rotatif.

Le frottement entre le disque rotatif et le lit fluidifié rotatif augmente la vitesse de rotation du lit fluidifié rotatif dans la zone annulaire proche du disque rotatif. La force centrifuge y est donc supérieure, ce qui diminue l'épaisseur du lit fluidifié rotatif et augmente sa densité de ce côté (13). La vitesse des particules solides est ralentie par le frottement contre le côté opposé (14), ce qui diminue la force centrifuge et donc la densité dudit lit fluidifié rotatif, ce qui augmente son épaisseur dans la zone annulaire proche de ce côté (14). La différence de densité et d'épaisseur du lit fluidifié rotatif, due au gradient de vitesse de rotation du lit fluidifié rotatif entre les différentes zones annulaires, entraîne une circulation longitudinale des particules solides, symbolisées par les flèches (18). Cette circulation permet un transfert très rapide des solides d'un côté à l'autre. Elle permet un bon transfert de calories ou de frigories, d'un côté à l'autre, et un bon transfert de moment cinétique de rotation entre le disque rotatif et le lit fluidifié rotatif sur l'ensemble du lit fluidifié rotatif, ce qui améliore son uniformité, sa densité moyenne et sa stabilité.

Le disque rotatif peut être lisse. Dans ce cas, le frottement relativement faible permet une vitesse de rotation du disque beaucoup plus grande que la vitesse de rotation du lit fluidifié. Cette très grande vitesse de rotation est favorable à la formation à l'intérieur de la zone centrale libre (A') d'un tourbillon libre qui empêche les particules solides d'être entraînées par les fluides (6) et (6.1) vers les ouvertures centrales de sortie. Si une très grande vitesse de rotation du disque n'est pas souhaitable, le frottement peut être augmenté en modifiant la surface du disque qui est en contact avec le lit fluidifié rotatif, par exemple en lui donnant le profil d'une roue dentée, comme dans l'exemple de la figure 2, ou à l'aide de petites ailettes (64) ou de protubérances le long d'une partie (63) de sa surface qui est en contact avec le lit fluidifié rotatif, comme montré dans l'exemple de la figure 3. Cela augmente le transfert de moment cinétique de rotation entre le disque rotatif et le lit fluidifié rotatif et permet d'atteindre la vitesse de rotation souhaitée du lit fluidifié rotatif et donc la stabilité et l'homogénéité souhaitée, sans nécessiter une vitesse de rotation du disque beaucoup plus grande.

Dans cet exemple l'ouverture centrale (21.1) permet d'augmenter la quantité de fluides (6.1) qui longent le disque rotatif (1) en diminuant la pression d'évacuation des fluides (6.1). Cela permet de mieux répartir les flux de fluides (6) et (6.1) au travers de la surface circulaire libre (17) et de renforcer la force du tourbillon libre lorsque la vitesse de rotation du disque (1) est très grande.

Ce dispositif peut, par exemple, être utilisé pour le séchage ou l'extraction de volatils de particules solides alimentées par le tube (20). Dans ce cas, le fluide (3) qui traverse le lit fluidifié rotatif est un gaz. La présence du disque rotatif tournant plus vite que la vitesse de rotation souhaitée du lit fluidifié rotatif permet d'améliorer la stabilité, la densité et l'uniformité du lit fluidifié rotatif. Dans cet exemple il permet également d'alimenter les particules solides sans générer d'instabilités dans le lit fluidifié rotatif.

**La** **figure 2a** montre la coupe transversale, le long du disque rotatif, d'un dispositif semblable au dispositif de la figure 1. Le fluide (3) est introduit par 6 tubes (5) au travers de l'enveloppe cylindrique (19), dans la chambre d'alimentation (4). La paroi circulaire (15) est formée par un ensemble de 36 plaquettes longitudinales (80), fixées dans les parois latérales (13) et (14) montrées sur la figure 1. Le fluide (3) est injecté dans la chambre circulaire au travers des fentes longitudinales (16) entre les plaquettes (80). La périphérie du disque rotatif (1), dont la section est représenté par des hachures radiales, est ondulée afin d'augmenter la friction et donc le transfert de moment cinétique de rotation aux particules solides. Le disque rotatif (1) est fixé à l'arbre de rotation (10).

**La** **figure 2b** montre la coupe transversale de l'agrandissement de 3 plaquettes (80) dont les surfaces planes (15.1) forment la surface circulaire (15) de la chambre circulaire. Dans cet exemple cette surface circulaire est donc polygonale. Les surfaces planes (15.1) pourraient avoir d'autres formes, par exemple avec des courbures concaves ou convexes. L'espace entre les plaquettes forme les fentes longitudinales (16), c'est-à-dire perpendiculaire au plan de la figure, d'une épaisseur, ei, correspondant à la distance minimum (95) séparant les plaquettes. Les fluides (3) sont injectés dans la chambre circulaire par ces fentes longitudinales dans une direction principalement tangentielle, c'est-à-dire parallèle aux surfaces (15.1). La largeur (96) de la surface de ces plaquettes (80) formant la surface circulaire de la chambre circulaire est la distance, di, séparant deux fentes consécutives.

De nombreuses expériences ont montré, que, pour obtenir un lit fluidifié rotatif relativement stable, homogène et dense dans une chambre circulaire, tout en limitant l'action du disque rotatif, il est souhaitable de respecter les conditions empiriques suivantes :
Le carré du rapport entre la surface de la paroi circulaire (15) et la somme des surfaces desdites ouvertures d'injection (16), doit être de préférence supérieure à 200 fois le rapport entre le diamètre de la chambre circulaire, D, et le diamètre moyen des particules solides, d, multiplié par le rapport entre la densité des fluides, pf, et la densité des solides, ps. Dans cet exemple le rapport des surfaces est environ égal au rapport de la distance (96) ou di entre les fentes d'injection des fluides et l'épaisseur des fentes d'injections, (95) ou εi.
   Soit: (di / εi)² > 200. (D/d) . (pf/ ps).

Il est généralement souhaitable d'avoir un grand nombre de fentes d'injection, de préférence égale ou supérieure à 30 et une épaisseur de fentes de préférence inférieure à dix fois la dimension des particules solides. Il est également souhaitable d'avoir un débit massique horaire des fluides, qui traversent le lit fluidifié rotatif, supérieur à plusieurs centaines de fois la masse du lit fluidifié rotatif.

**La** **figure 3** montre un autre exemple d'un dispositif semblables au dispositif de la figure 1. L'arrête (60) du bord extérieur (61) du disque rotatif (1), située du côté de la paroi latérale (13), est tranchante. Ce bord extérieur (61) est élargi, légèrement en retrait, de l'autre côté, afin de délimiter un couloir annulaire (62) avec la surface circulaire (15). Dans cet exemple, la surface (63) du disque rotatif qui est en contact avec le lit fluidifié rotatif, tournant dans la zone annulaire (A) est profilée afin de renvoyer les particules solides (63) vers le côté opposé (14). Cette surface peut comprendre des ailettes (64) ou protubérances, qui améliorent le transfert de moment cinétique de rotation du disque rotatif (1) au lit fluidifié rotatif.

Dans cet exemple, le dispositif d'alimentation des fluides au travers de la paroi circulaire permet d'alimenter deux flux différents de fluides (3.1) et (3.2) au travers de deux chambres d'alimentation séparées, (4.1) et (4.2). Le dispositif d'évacuation centrale des fluides ne comprend qu'une ouverture centrale de sortie (21.2).

Ce dispositif peut être utilisé, par exemple, pour la fabrication de poudre ou microparticules. Dans ce cas, le ou les tubes (20) sont conçus pour alimenter un liquide (2) contenant des microparticules en suspension ou des solides en solution dans le liquide. Ce liquide est injecté ou pulvérisé sur la surface du disque rotatif (1). Lorsque le dispositif est en fonctionnement, le liquide forme un film mince (8) qui est expulsé par la force centrifuge de l'arrête tranchante (60) du disque rotatif, sous la forme de microgouttelettes (65). Les gouttelettes sont d'autant plus petites que le disque tourne vite et que l'arrête est tranchante. Un gaz très chaud (3.1) évapore en un temps très court, la surface des microgouttelettes qui sont entraînées dans le couloir annulaire (52) vers le lit fluidifié rotatif (A), où elles sont séchées progressivement par un gaz moins chaud (3.2) qui traverse le lit fluidifié rotatif. Elles sont ensuite évacuées par les ouvertures de sortie (30). La solidification des microgouttelettes peut également être obtenue par des réactions chimiques, par exemple de polymérisation, au contact des gaz traversant le lit fluidifié rotatif.

Cet exemple comprend également un tube central (20.1) relié à un disque creux (29) permettant de pulvériser un liquide (2.1), sous la forme de microgouttelettes, à proximité de la surface circulaire libre (17) du lit fluidifié rotatif traversée par un gaz (6.1). Ce disque creux (29) est fixe ou rotatif et l'injection des microgouttelettes se fait de préférence dans une direction tangentielle et à proximité du disque rotatif afin de perturber le moins possible le tourbillon libre dans la zone centrale libre. Ce dispositif peut être utilisé pour imprégner, enrober ou enduire les particules solides du lit fluidifié rotatif.

**La** **figure 4** montre un autre exemple d'un dispositif semblable au dispositif des figures 1 et 3. Un deuxième disque rotatif (1.2) est attaché au disque rotatif (1), à une distance (56), par des rivets (55). Un tube central (20.1) traverse l'ouverture centrale de sortie (21.2) et une ouverture centrale (26) du deuxième disque rotatif (1.2). Ce tube central (20.1) permet l'injection ou la pulvérisation d'un fluide (2.1), pouvant entraîner des solides ou contenir des solides en solution, sur la surface intérieure du premier disque rotatif (1).

Le dispositif d'alimentation des fluides comprend deux chambres d'alimentation (4.1) et (4.2) permettant d'alimenter deux fluides (3.1) et (3.2) différents et/ou à des températures et pressions différentes dans les zones annulaires (A) et (B).

Ce dispositif peut être utilisé, par exemple, pour l'imprégnation, l'enrobage ou l'enduisage de particules solides. En effet, lorsque le dispositif est en fonctionnement, un liquide (2.1) injecté ou pulvérisé par le tube central (20.1) sur le disque rotatif (1), est poussé par la force centrifuge vers le bord extérieur de ce disque rotatif en formant un film mince (9). Les particules solides en suspension dans un flux de gaz (2), alimentées par le tube central (20) forment un lit fluidifié rotatif dans la zone annulaire (B), entre les deux disques rotatifs, traversé par une partie des gaz (3.1), relativement froid. Après avoir traversé le lit fluidifié rotatif de la zone annulaire (B), les gaz (6.1) peuvent s'échapper par l'ouverture centrale (26) vers l'ouverture centrale (21.2). Les particules solides qui tournent dans la zone annulaire (B) sont mouillée par le liquide (2.1) au contact du film liquide (9) le long de la surface intérieure du disque (1). Les nombreuses collisions entre les particules solides, à l'intérieur de la zone annulaire (B), répartissent ce liquide de manière relativement uniforme sur les particules solides. L'excédent de gaz (3.1) entraîne les particules solides vers la zone annulaire (A) du lit fluidifié rotatif, où elles peuvent être séchées par un flux de gaz chauds (3.2), qui traversent le lit fluidifié rotatif. Les particules solides séchées sont évacuées par les ouvertures de sortie (30).

La présence du deuxième disque n'est pas indispensable pour l'enrobage, l'enduisage ou l'imprégnation de particules solides. Il est toutefois souhaitable d'avoir une zone distincte, la zone B, où l'humidité des particules solides est préservée suffisamment longtemps, afin de permettre l'uniformisation de leur enrobage, enduisage ou imprégnation. Il est donc souhaitable que cette zone soit séparée de la zone de séchage. Le deuxième disque est également souhaitable, si le tube central (20.1) est utilisé pour l'alimentation de particules solides entraînées par un fluide gazeux, afin d'éviter le refoulement, par l'ouverture centrale (26) du disque rotatif (1.2), d'une partie significative des particules solides vers la cheminée centrale (21.2) avant d'avoir atteint le lit fluidifié rotatif.

La distance (56) séparant les deux disques rotatifs et le débit de gaz (6.1) influence le temps de résidence des particules solides dans la zone annulaire (B) et donc l'uniformité de leur enrobage, enduisage ou imprégnation. La très forte agitation du lit fluidifié rotatif empêche normalement la formation d'agglomérats. Si toutefois des agglomérats devaient se former, ils ont tendance à rester le long de la paroi circulaire, car ils sont plus lourds. Un tube (36) d'évacuation de solides, situé le long de la paroi circulaire permet d'évacuer les particules solides (37) les plus lourdes de manière continue ou par intermittence.

**La** **figure 5** montre la section longitudinale d'un exemple de dispositif permettant d'obtenir un lit fluidifié rotatif traversé par des fluides qui sont évacués centralement des deux côtés latéraux (13) et (14). Il est caractérisé en ce qu'il comprend un disque rotatif (1) qui sépare la chambre circulaire en deux zones circulaires. Un support rigide (87) permet de maintenir le disque rotatif (1) à une certaine distance du côté latéral (13). Le fluide (52), injecté par le tube (51), sert à empêcher les particules solides entraînées par le fluide (6.1) d'encrasser les roulements à billes (50). Il peut aussi servir à les refroidir.

Par rapport à la figure 1, l'évacuation centrale des fluides (6.1) et (6.2), ayant traversé respectivement les zones annulaires (B) et (A), se fait respectivement par les ensembles de tubes (22.1) et (22.2) au travers de chambres annulaires (23.1) et (23.2) par les deux ouvertures centrales de sortie (21.1) et (21.2), situées de part et d'autre du disque rotatif (1), au lieu d'être concentriques et du côté opposé du disque rotatif. Dans cet exemple, il y a deux chambres d'alimentation (4.1) et (4.2) qui peuvent alimenter des fluides (3.1) et (3.2) différents et/ou à des températures et pressions différentes de part et d'autre du disque rotatif. Il n'y a pas d'alimentation de fluides et/ou de solides (2) contre le disque rotatif, bien que cela soit possible, comme le montrent les figures 7 et 8. L'alimentation de solides (88), éventuellement entraînés par un fluide, se fait par le tube (89) au travers de la paroi latérale (13) ou de la paroi circulaire (15), comme le tube (86) montré sur la figure 8. Ces deux dispositifs d'alimentation de solides dans le lit fluidifié rotatif ont une influence négative sur la stabilité et la densité du lit fluidifié rotatif dans la zone annulaire (A). Un dispositif central d'alimentation de solides, par exemple entre deux disques rotatifs, comme l'exemple de la figure 7, est préférable.

Le tube central (20.1) permet d'injecter ou de pulvériser un liquide (2.1) sur le disque rotatif (1), lorsque le fluide (6.2) est un gaz. Sous l'effet de la force centrifuge, ce liquide (2.1) s'écoule sous la forme un film mince (9). Une saillie circulaire (83), profilée adéquatement et située sur le disque rotatif à l'intérieure de la zone centrale libre (A'), disperse ce liquide dans ladite zone centrale libre (A'), sous la forme de microgouttelettes, qui peuvent refroidir le gaz (6.2) sans perturber le tourbillon libre si le disque rotatif tourne suffisamment vite. Ce dispositif permet de refroidir le gaz (6.2) quelques millisecondes après avoir traversé le lit fluidifié rotatif.

Les échanges de particules solides entre les deux zones annulaires (A) et (B) se font au travers de l'espace qui sépare le bord extérieur du disque rotatif (1) de la paroi circulaire (15). Ils sont relativement importants en raison de la forte turbulence des lits fluidifiés rotatifs. Ils dépendent de la distance entre la périphérie du disque rotatif et la paroi circulaire.

Le disque rotatif permet aussi une circulation forcée et contrôlée de particules solides entre les deux zones, comme montré dans cet exemple, grâce aux passages le long de la périphérie du disque rotatif. Ces passages sont équivalents aux espaces séparant les dents (70) d'une roue dentée. Ces dents sont profilées de manière à pousser ou aspirer les particules solides (71) dans la direction souhaitée, de la zone annulaire (A) vers la zone annulaire (B) dans cet exemple, lorsque le disque rotatif tourne plus vite que le lit fluidifié rotatif. Les particules solides (72) retournent de la zone annulaire (B) vers la zone annulaire (A), sous l'effet de la différence de pression due à l'accumulation de particules solides en suspension dans la zone annulaire (B). La vitesse des échanges de particules solides entre les zones (A) et (B) peut être contrôlée par la vitesse de rotation du disque rotatif (1). L'excès de particules solides (35) est évacué par les ouvertures de sortie (30).

La différence d'épaisseur du lit fluidifié rotatif entre les zones annulaires (A) et (B) dépend des différences de densités du lit rotatif entre chaque zone, qui dépendent des différences de vitesse de rotation du lit fluidifié rotatif et des flux de fluides qui traversent le lit fluidifié. Elle dépend aussi des différences de pression d'évacuation des fluides (6.1) et (6.2). Ces différences d'épaisseur ne peuvent varier que dans des limites raisonnables. Il est donc nécessaire d'avoir un dispositif qui permet de les contrôler. Par exemple un dispositif de contrôle des différences de pression entre les zones centrales libres (A') et (B'), relié au dispositif d'évacuation des fluides, afin de maintenir ces différences de pression au niveau souhaité.

**La** **figure 6** est une variante de la figure 5, où le disque rotatif (1) comprend des ouvertures de passages (90) situées à l'intérieur du lit fluidifié rotatif lorsque le dispose est en fonctionnement, afin de permettre le passage de particules solides, accompagnées d'un peu de fluide, d'une zone annulaire à l'autre. Ces ouvertures de passage sont profilées, éventuellement avec l'aide d'ailettes, afin de pousser ou aspirer les particules solides (91) dans le sens souhaité, de la zone B vers la zone A dans cet exemple, lorsque le disque rotatif tourne plus vite que le lit fluidifié rotatif. Les particules solides (92) retournent de la zone annulaire (A) vers la zone (B), sous l'effet de la différence de pression due à l'accumulation de particules solides en suspension dans la zone annulaire (A). La vitesse de circulation des particules solides entre les zones annulaires (A) et (B) est contrôlée par la vitesse de rotation du disque rotatif (1). L'excès de particules solides (35) est évacué par les ouvertures de sortie (30).

La surface circulaire libre (17.1) du lit fluidifié rotatif dans la zone annulaire (B) doit être plus près de l'axe central (11) que les ouvertures (90) du disque rotatif, pour permettre le transfert de particules solides de la zone annulaire (B) vers la zone annulaire (A). Autrement cela entraînerait un transfert important de fluide non accompagné de particules solides, de cette zone (B) vers la zone (A). Cette situation étant généralement non souhaitable, il est nécessaire de disposer d'un dispositif de contrôle des pressions relatives dans les zones libres, afin de l'éviter.

L'alimentation des solides (88) se fait à l'aide d'un tube (89) traversant le côté latéral (13) à proximité de la paroi circulaire.

**La** **figure 7** montre la section longitudinale d'un dispositif semblable à celui de la figure 5 avec un deuxième disque rotatif (1.2), fixé au disque rotatif (1) par exemple par des rivets (55). Le disque (1.2) est situé du côté du support (87) du disque rotatif (1.1). Il a une ouverture centrale (26) qui lui permet d'entourer ce support fixe (87).

Un ou plusieurs tubes (20), traversant le support fixe (87) qui maintient le disque rotatif (1) à la distance souhaitée du côté latéral (13), alimentent les particules solides (2), éventuellement entraînées par un fluide. Dans cet exemple, le support fixe (87) est profilé de manière à guider les particules solides (2) le long du disque rotatif (1), afin de leur donner une vitesse de rotation et donc une force centrifuge suffisante pour ne pas être refoulées par le fluide (6.1), qui passe par l'espace séparant les deux disques rotatifs, au travers de l'ouverture centrale (26) du disque rotatif (1.2). Les particules solides qui sont entraînée dans un mouvement de rotation par les deux disques rotatifs sont poussées par la force centrifuge vers la périphérie de ces disques. Dans cet exemple, le disque rotatif (1) est profilé afin de guider les particules solides vers la zone annulaire (B), où elles forment un lit rotatif, fluidifié par le fluide (3.1) injecté au travers de la paroi circulaire dans une direction principalement tangentielle.

Dans cet exemple, il n'y a pas d'ouverture de passage (90) permettant le transfert de particules solides d'une zone à l'autre. Les transferts de particules solides de la zone annulaire (B) vers la zone annulaire (A) et les échanges de particules solides entre les deux zones annulaires se font entre la périphérie du disque (1) et la paroi circulaire (15). La largeur de ce passage est choisie, afin de permettre le transfert de chaleur souhaité entre ces zones, si elles sont à des températures différentes.

Le disque rotatif (1) pourrait avoir des dents ou des ailettes adéquatement profilées, le long de son bord extérieur, comme dans l'exemple de la figure 5, afin de pousser ou aspirer les particules solides (92) dans la direction souhaitées et donc d'augmenter et de contrôler les échanges de particules solides entre les deux zones annulaires et donc de contrôler la différence de température entre les deux zones annulaires en contrôlant la vitesse de rotation du disque rotatif.

Le tube central (20.1) qui traverse le côté latéral (14) en passant par l'ouverture centrale (21.2) peut être utilisé, par exemple, pour injecter ou pulvériser un liquide (2.1) sur la surface du disque (1) et former un film mince (9) qui s'écoule rapidement le long de cette surface sous l'effet de la force centrifuge. Dans cet exemple, le disque rotatif (1) a une saillie circulaire (83) qui est profilée de manière à disperser ce liquide sous la forme de fines gouttelettes à l'intérieur de la zone centrale libre (A'). Ces gouttelettes peuvent avoir une vitesse de rotation supérieure à celle du lit fluidifié rotatif, ce qui permet de maintenir un tourbillon libre dans la zone libre, tout en refroidissant, par leur évaporation, le gaz (6.2) quelques millisecondes après qu'il ait traversé le lit fluidifié rotatif de la zone annulaire (A).

La figure 8 montre la section longitudinale d'un dispositif semblable à celui de la figure 7, avec un disque rotatif creux (1.3) pouvant être deux disques attachés l'un à l'autre et séparés par un espace fermé. Un tube central (20.2) traversant l'arbre rotatif (10) permet d'alimenter un fluide (2.2) à l'intérieur du disque rotatif creux (1.3). La force centrifuge permet d'obtenir une pression relativement élevée à la périphérie du disque rotatif creux et d'injecter ou de pulvériser le fluide (2.2) au travers d'orifices (89), situés de préférence à la périphérie du disque rotatif creux, dans la direction souhaitée, tout en accélérant la vitesse de rotation du lit fluidifié rotatif. Ce fluide (2.2) peut entraîner des particules solides ou contenir des solides en solution.

Dans cet exemple, un tube central, (20.1) venant du côté (14) et un ou plusieurs tube (20) venant du côté (13) à proximité de l'axe central permettent d'injecter des liquides de refroidissement (2.1) sur chacune des faces du disque rotatif (1) creux. Des saillies circulaire (83.1) et (83.2), adéquatement profilées et localisées dans les zones centrales libres, (A') et (B'), permettent de disperser dans ces zones centrales libre, sous la forme de microgouttelettes, les films de liquides (9) qui s'écoulent le long du disque rotatif sous l'effet de la force centrifuge, lorsque le dispositif est en fonctionnement. L'évaporation de ces liquides permet de refroidir brutalement les gaz chauds qui ont traversé le lit fluidifié rotatif, sans ralentir la vitesse de rotation des tourbillons libres formés par ces gaz.

Dans cet exemple, le dispositif d'alimentation de fluides au travers la paroi circulaire (15) permet d'alimenter trois fluides différents, et/ou à des températures et pressions différentes (3.1), (3.2) et (3.3) et ces fluides doivent se retrouver sous la forme gazeuse (6.1) et (6.2) après avoir traversé le lit fluidifié rotatif pour obtenir le refroidissement rapide décrit ci-dessus.

Des exemples ci-dessous montrent comment ces dispositifs selon l'invention peuvent être utilisés pour la transformation de particules solides comme la polymérisation catalytique ou la torréfaction, la pyrolyse et la gazéification de bio particules ou autres particules solides réagissant au contact des fluides traversant le lit fluidifié rotatif.

Par exemple, le dispositif de la figure 1 peut être utilisé pour la polymérisation catalytique d'éthylène. L'activité des particules catalytique est d'autant plus grande qu'elles sont petites ; la polymérisation de l'éthylène est une réaction très exothermique et le refroidissement par l'évaporation de liquide a des contre-indications. Les lits fluidifiés rotatifs sont les mieux à même de refroidir de très petites particules à l'aide d'un très grand flux de gaz. L'utilisation du dispositif décrit dans la figure 1 permet de faciliter l'alimentation de microparticules catalytiques, éventuellement pré polymérisées, et de faire traverser le lit fluidifié rotatif chaque seconde par une masse d'éthylène du même ordre de grandeur que la masse du lit fluidifié, tout en restant stable, dense et homogène. Ce dispositif permet d'utiliser de l'éthylène à basse pression. Cet éthylène est refroidi a l'extérieur du dispositif et recyclé. Il permet de contrôler la température du lit avec une très grande précision tout en permettant une activité catalytique extrêmement grande et donc des temps de séjour des particules catalytiques à l'intérieur de la chambre circulaire de l'ordre de la minute, comparé à plusieurs heures dans les procédés à phase gazeuse classique, qui doivent travailler à des pressions relativement élevées et utiliser l'évaporation d'hydrocarbures légers pour le refroidissement. La possibilité d'injecter des gaz différents et/ou à des températures différentes à l'intérieur de zones annulaires séparées, par exemple à l'aide de dispositifs semblables à ceux décrits dans les figures 5 à 8, permet de fabriquer des polymères plus complexes. Le recyclage des gaz différents peut se faire séparément.

La torréfaction de biomasses est un autre exemple. Elle nécessite un apport de calories à des températures relativement basses. L'utilisation du dispositif de la figure 1 permet, par exemple, d'alimenter de petites particules de biomasse broyée et éventuellement humide par extrusion ou entraînement à l'aide d'un gaz derrière le disque rotatif et de faire traverser le lit fluidifié rotatif contenant les particules de biomasse par une très grande quantité de gaz chauds pouvant éventuellement être recyclés. Comme le transfert de chaleur est très efficace et très rapide à l'intérieur du lit fluidifié rotatif si les particules de biomasse sont très petites, la température de ce gaz chaud peut être proche de la température souhaitée pour la torréfaction et donc relativement basse. Ceci permet d'utiliser de l'air en dessous du point d'inflammabilité de la biomasse plutôt que des gaz plus couteux, comme par exemple de la vapeur d'eau.

La gazéification de biomasses ou autres matières carbonées nécessitent un apport de chaleur à des températures élevées. Des dispositifs semblables à ceux des figures de 5 à 8 peuvent convenir. La biomasse est de préférence alimentée entre deux disques (figure 7) en même temps qu'une petite quantité, par exemple de quelques pourcents, de particules inertes ou catalytiques, comme du sable ou de la dolomie. L'ensemble des solides sont alimentés par exemple dans la zone annulaire (B) où se passe la réaction endothermique de gazéification. Ces particules solides sont fluidifiées par leur gazéification et par un flux de gaz, de préférence non oxydant, par exemple de la vapeur d'eau. Les résidus carbonés et les particules solides inertes qui s'accumulent dans la zone annulaire (B) sont progressivement transférés vers la zone annulaire (A), qui est traversée par un flux de gaz contenant de l'oxygène, par exemple de l'air. La combustion d'au moins une partie du carbone résiduel produit la chaleur nécessaire à la gazéification. Les calories sont transférées vers la zone annulaire (B) grâce aux échanges de particules solides entre les deux zones annulaires. Les particules inertes qui s'accumulent dans le lit fluidifié rotatif permettent d'augmenter l'importance de ces échanges de particules solides et donc de calories. L'excès des solides est évacué par les sorties (30).

Des simulations ont montré qu'une température de l'ordre de 700°C dans la zone de combustion et de l'ordre de 600°C dans la zone de gazéification peut permettre une intensification de la gazéification d'un facteur de plus de dix par rapport aux procédés classiques. Ce dispositif permet de séparer les gaz de combustion des gaz de gazéification. En outre, la gazéification très rapide à des températures relativement élevées permet d'augmenter la proportion de gaz produit et leur refroidissement très rapide permet de réduire les réactions secondaires indésirables.

Ces dispositifs selon l'invention peuvent aussi être utilisés pour la transformation de fluides traversant le lit fluidifié rotatif et réagissant au contact des particules solides en suspension dans le lit fluidifié rotatif utilisant ce dispositif. Lesdites particules solides peuvent être, au moins en partie, des catalyseurs favorisant la dite transformation, comme par exemple le craquage catalytique ou thermique d'hydrocarbures.

Les hydrocarbures sont alimentés, par exemple dans la zone annulaire (B) où se passe la réaction endothermique de craquage catalytique ou thermique, au travers de la paroi circulaire ou entre deux disques rotatifs ou à l'intérieur d'un disque rotatif creux, sous la forme gazeuse ou liquide. La zone annulaire (A) est traversée par des gaz qui y produisent une réaction exothermiques, par exemple la combustion de carbone résiduel déposé sur les particules solides ou la combustion d'un mélange de gaz, par exemple de l'hydrogène et de l'oxygène, injectés au travers de la paroi circulaire dans la zone annulaire (A). Les calories produites sont transférées dans la zone annulaire (B) par l'échange des particules solides entre les deux zones. Ces échanges de particules solides permettent de maintenir le lit fluidifié rotatif dans la zone annulaire (B) à la température de craquage souhaitée. Si les particules solides sont des catalyseurs, la combustion du carbone déposé sur ces particules lors du craquage catalytique des hydrocarbures dans la zone annulaire (A) permet la régénération du catalyseur.

Ces procédés nécessitent des temps de réaction très courts, suivis d'un refroidissement très rapide, afin d'éviter les réactions secondaires qui sont généralement indésirables. Le temps de séjour des fluides dans le lit fluidifié rotatif étant de l'ordre de millisecondes et la possibilité de pulvériser dans la zone centrale libre, à l'aide du disque rotatif, des microgouttelettes d'un liquide permettant de refroidir les gaz quelques millisecondes après avoir traversé le lit fluidifié rotatif est particulièrement favorable à ces procédés. Ces temps de séjours extrêmement courts permettent de travailler à des températures du lit fluidifié rotatif et donc des vitesses de réaction significativement supérieures aux températures utilisées dans les dispositifs classiques.

Ces températures et vitesses de réaction élevées génèrent beaucoup de carbone résiduel qui se dépose sur les particules catalytiques. Afin de maintenir leur activité catalytique, il est nécessaire de les régénérer très rapidement. Le dispositif selon l'invention permet un échange de particules solides entre les deux zones annulaire très rapide, de l'ordre de la seconde. Ce dispositif permet donc de plus grandes vitesses de réaction et donc une intensification de ces procédés de parfois plusieurs ordres de grandeur.

## Revendications

1. Dispositif pour l'obtention d'un lit fluidifié rotatif à l'intérieur d'une chambre circulaire fixe délimitée par une paroi circulaire (15) et des parois latérales, (13) et (14) fixes, comprenant :
- un dispositif d'injection de fluides (3), gazeux ou liquides, par de nombreuses ouvertures d'injection (16) au travers de ladite paroi circulaire (15), dans des directions principalement tangentielle à ladite paroi circulaire (15) ;
- un dispositif d'évacuation centrale des fluides (6), qui ont traversé le lit fluidifié rotatif, au travers d'au moins une ouverture centrale de sortie (21.1) ou (21.2) disposée autour ou à proximité de l'axe central (11) de la dite chambre circulaire ;
- un dispositif d'alimentation de particules solides à l'intérieur de la dite chambre circulaire;
- un dispositif d'évacuation de particules solides de la chambre circulaire, comprenant au moins une ouverture de sortie (30) située à une distance (31) de ladite paroi circulaire correspondant à l'épaisseur souhaitée du lit fluidifié rotatif ;
**caractérisé en ce qu'**il comprend :
- au moins un disque rotatif (1), dont l'axe de rotation est le long ou à proximité de l'axe central (11) de ladite chambre circulaire et dont le bord extérieur (61) est à une distance (41) de ladite paroi circulaire (15) inférieure à l'épaisseur souhaitée (31) dudit lit fluidifié rotatif lorsque le dispositif est en fonctionnement et
- un dispositif (12) permettant de faire tourner ledit disque rotatif (1) dans le même sens et plus vite que ledit lit fluidifié rotatif.

2. Dispositif suivant la revendication 1, **caractérisé en ce que** le carré du rapport entre la surface de la paroi circulaire (15) et la somme des surfaces desdites ouvertures d'injection (16) est supérieur à 200 fois le rapport entre le diamètre moyen de la chambre circulaire, D, et le diamètre moyen des particules solides, d, multiplié par le rapport entre la densité moyenne du fluide, pf, et la densité moyenne des solides, ps.

3. Dispositif suivant les revendications de 1 ou 2, **caractérisé en ce que** la distance (96) moyenne séparant lesdites ouvertures d'injection (16) est inférieure au vingtième du diamètre moyen, D, de ladite chambre circulaire et **en ce que** le débit horaire massique des fluides traversant le lit fluidifié rotatif est supérieur à 200 fois la masse dudit lit fluidifié rotatif lorsque le dispositif est en fonctionnement.

4. Dispositif suivant l'une quelconque des revendications de 1 à 3, **caractérisé en ce qu'**il comprend au moins un tube (20) permettant d'alimenter des solides, éventuellement entraînés par un fluide ou en solution dans un fluide (2), à proximité de l'axe central (11), contre le disque rotatif (1).

5. Dispositif suivant la revendication 4, **caractérisé en ce que** l'espace annulaire (62) entre le bord extérieur (61) dudit disque rotatif (1) et la paroi circulaire (15) est traversé par des gaz (3.1) injectés au travers de ladite paroi circulaire (15) et **en ce que** ledit tube (20) permet d'injecter ou de pulvériser sur la surface dudit disque rotatif (1) un liquide contenant des solides en solution et **en ce que** l'arête (60) de ladite surface avec ledit bord extérieur (61) forme un angle aigu et tranchant.

6. Dispositif suivant l'une quelconque des revendications de 1 à 5, **caractérisé en ce que** le bord extérieur (61) du disque rotatif ou au moins une partie (63) de la surface dudit disque rotatif, qui est en contact avec le lit fluidifié rotatif lorsque le dispositif est en fonctionnement, comprend des dents (70) ou des protubérances ou des ailettes (64) qui augmentent la friction entre le disque rotatif et le lit fluidifié.

7. Dispositif suivant la revendication 6, **caractérisé en ce que** lesdites dents (70 ou, protubérances ou ailettes (64) et/ou ladite partie (63) de la surface du disque rotatif sont profilées de manière à pousser les particules solides dans la direction longitudinale souhaitée, lorsque le disque rotatif tourne plus vite que le lit fluidifié rotatif.

8. Dispositif suivant l'une quelconque des revendications de 1 à 7, **caractérisé en ce qu'**il comprend un tube central (20.1) ou un tube (20) à proximité de l'axe central permettant d'injecter ou de pulvériser un liquide (2.1) sur la surface dudit disque rotatif et **en ce que** ledit disque rotatif comprend au moins une saillie circulaire (83) située sur ladite surface dudit disque rotatif, dans la zone centrale libre et qui est profilée de manière à disperser sous l'effet de la force centrifuge, dans ladite zone centrale libre des microgouttelettes dudit liquide, lorsque ledit dispositif est en fonctionnement.

9. Dispositif suivant l'une quelconque des revendications de 1 à 8, **caractérisé en ce que** ledit disque rotatif (1) est fixé à au moins un deuxième disque (1.2) délimitant un espace annulaire entre les deux disques rotatifs et **en ce que** ledit deuxième disque (1.2) comprend une ouverture centrale (26) permettant l'évacuation centrale de fluides (6.1) passant par ledit espace annulaire et l'alimentation centrale de liquides (2.1) ou de solides (2) éventuellement entraînés par un fluide ou en solution dans un liquide, à l'aide d'un tube (20.1) ou (20) le long ou à proximité de l'axe central (11).

10. Dispositif suivant l'une quelconque des revendications 1 à 9, **caractérisé en ce que** l'évacuation centrale des fluides (6) qui ont traversé le lit fluidifié rotatif se fait au travers d'un desdits côtés latéraux (14) et ledit disque rotatif (1) est situé à proximité du côté opposé (13).

11. Dispositif suivant l'une quelconque des revendications 1 à 9, **caractérisé en ce que** l'évacuation centrale des fluides qui ont traversé le lit fluidifié rotatif se fait au travers des deux côtés latéraux (13) et (14) et **en ce que** ledit disque rotatif (1) divise ladite chambre circulaire en deux zones circulaires.

12. Dispositif suivant la revendication 11, **caractérisé en ce que** ledit disque rotatif (1) comprend des ouvertures (90) situées à une distance (42) de la paroi circulaire (15), inférieure à l'épaisseur souhaitée (31) dudit lit fluidifié rotatif lorsque ledit dispositif est en fonctionnement, et **en ce que** lesdites ouvertures (90) sont profilées de manière à favoriser le transfert de particules solides d'une zone annulaire à l'autre, dans la direction souhaitée, lorsque ledit disque rotatif tourne plus vite que ledit lit fluidifié rotatif.

13. Dispositif suivant l'une quelconque des revendications de 1 à 12, **caractérisé en ce qu'**il comprend un disque rotatif creux (1.3) et un tube central (20.2) traversant l'arbre de rotation (10), auquel est fixé ledit disque rotatif creux, et permettant d'alimenter un fluide (2.2), pouvant entraîner des particules solides ou contenir des solides en solution ou en suspension, à l'intérieur dudit disque rotatif creux et **en ce que** ledit disque rotatif creux (1.3) comprend des orifices (89) le long de sa périphérie permettant d'injecter ou de pulvériser ledit fluide (2.2) dans la direction souhaitée à l'intérieur dudit lit fluidifié rotatif lorsque le dit dispositif est en fonctionnement.

14. Procédé de polymérisation catalytique, de séchage, d'extraction de volatiles, d'enduisage, d'enrobage, d'imprégnation, de torréfaction, de pyrolyse, de gazéification, de solidification ou autre transformation de particules solides ou liquides en suspension dans un lit fluidifié rotatif ou de transformation catalytique ou thermique de fluides traversant ledit lit fluidifié rotatif utilisant un dispositif suivant l'une quelconque des revendications de 1 à 13, **caractérisé en ce que** lesdites particules solides ou liquides ou lesdits fluides subissent une transformation en se contactant à l'intérieur du lit fluidifié rotatif produit par ce dispositif.

15. Procédé de transformation d'au moins deux fluides différents et/ou de solides suivant la revendication 14, **caractérisé en ce qu'**une réaction exothermique se produit dans une zone annulaire dudit lit fluidifié rotatif, et une réaction endothermique se produit dans une autre zone annulaire dudit lit fluidifié rotatif, les dites zones étant traversées par lesdits fluides et séparées l'une de l'autre par au moins un disque rotatif de ce dispositif.

16. Procédé de transformation d'au moins deux fluides différents suivant la revendication 15, **caractérisé en ce qu'**au moins une partie desdites particules solides sont des catalyseurs pour une desdites transformation d'un desdits fluides dans une zone annulaire et qu'ils sont régénérés par l'autre dit fluide dans une autre zone annulaire.

17. Procédé de solidification de microgouttelettes suivant la revendication 14, **caractérisé en ce que** les microgouttelettes sont obtenues par la dispersion centrifuge d'un film de liquide injecté ou pulvérisé sur un disque rotatif de ce dispositif et **en ce que** la solidification est obtenue par l'évaporation dudit liquide contenant des solides en solution ou par réaction chimique ou thermique au contact de gaz traversant le lit fluidifié rotatif à proximité dudit disque rotatif.

18. Procédé suivant l'une quelconque des revendications de 14 à 17 **caractérisé en ce qu'**il comprend l'étape qui consiste à recycler au moins un desdits fluides.

## Patentansprüche

1. Vorrichtung zum Erhalt einer rotierenden Wirbelschicht im Inneren einer ortsfesten kreisförmigen Kammer, die von einer kreisförmigen Wand (15) und von ortsfesten Seitenwänden (13) und (14) begrenzt wird, die enthält:
- eine Vorrichtung zum Einspritzen von gasförmigen oder flüssigen Fluiden (3) über viele Einspritzöffnungen (16) durch die kreisförmige Wand (15) hindurch in Richtungen hauptsächlich tangential zur kreisförmigen Wand (15);
- eine zentrale Ableitungsvorrichtung der Fluide (6), die die rotierende Wirbelschicht durchquert haben, durch mindestens eine zentrale Ausgangsöffnung (21.1) oder (21.2) hindurch, die um die Mittelachse (11) der kreisförmigen Kammer herum oder in ihrer Nähe angeordnet ist;
- eine Zufuhrvorrichtung von festen Teilchen ins Innere der kreisförmigen Kammer;
- eine Vorrichtung zur Ableitung fester Teilchen aus der kreisförmigen Kammer, die mindestens eine Ausgangsöffnung (30) enthält, die sich in einem Abstand (31) von der kreisförmigen Wand entsprechend der gewünschten Dicke der rotierenden Wirbelschicht befindet;
**dadurch gekennzeichnet, dass** sie enthält:
- mindestens eine rotierende Scheibe (1), deren Rotationsachse entlang oder in der Nähe der Mittelachse (11) der kreisförmigen Kammer verläuft und deren Außenrand (61) sich in einem Abstand (41) von der kreisförmigen Wand (15) befindet, der kleiner ist als die gewünschte Dicke (31) der rotierenden Wirbelschicht, wenn die Vorrichtung in Betrieb ist, und
- eine Vorrichtung (12), die es ermöglicht, die rotierende Scheibe (1) in der gleichen Richtung und schneller als die rotierende Wirbelschicht drehen zu lassen.

2. Vorrichtung nach Anspruch 1, **dadurch gekennzeichnet, dass** das Quadrat des Verhältnisses zwischen der Fläche der kreisförmigen Wand (15) und der Summe der Flächen der Einspritzöffnungen (16) größer ist als das 200-fache des Verhältnisses zwischen dem mittleren Durchmesser der kreisförmigen Kammer, D, und dem mittleren Durchmesser der festen Teilchen, d, multipliziert mit dem Verhältnis zwischen der mittleren Dichte des Fluids, pf, und der mittleren Dichte der Feststoffe, ps.

3. Vorrichtung nach den Ansprüchen 1 und 2, **dadurch gekennzeichnet, dass** der die Einspritzöffnungen (16) trennende mittlere Abstand (96) kleiner als ein Zwanzigstel des mittleren Durchmessers D der kreisförmigen Kammer ist, und dass der stündliche Massendurchsatz der die rotierende Wirbelschicht durchquerenden Fluide größer als das 200-fache der Masse der rotierenden Wirbelschicht ist, wenn die Vorrichtung in Betrieb ist.

4. Vorrichtung nach einem der Ansprüche 1 bis 3, **dadurch gekennzeichnet, dass** sie mindestens ein Rohr (20) enthält, das es ermöglicht, Feststoffe, ggf. durch ein Fluid angetrieben oder in Lösung in einem Fluid (2), in der Nähe der Mittelachse (11) gegen die rotierende Scheibe (1) zuzuführen.

5. Vorrichtung nach Anspruch 4, **dadurch gekennzeichnet, dass** der ringförmige Raum (62) zwischen dem Außenrand (61) der rotierenden Scheibe (1) und der kreisförmigen Wand (15) von Gasen (3.1) durchquert wird, die durch die kreisförmige Wand (15) hindurch eingespritzt werden, und dass das Rohr (20) es erlaubt, auf die Fläche der rotierenden Scheibe (1) eine Feststoffe in Lösung enthaltende Flüssigkeit zu spritzen oder zu sprühen, und dass die Kante (60) der Fläche mit dem Außenrand (61) einen spitzen und scharfen Winkel formt.

6. Vorrichtung nach einem der Ansprüche 1 bis 5, **dadurch gekennzeichnet, dass** der Außenrand (61) der rotierenden Scheibe oder zumindest ein Teil (63) der Fläche der rotierenden Scheibe, der mit der rotierenden Wirbelschicht in Kontakt ist, wenn die Vorrichtung in Betrieb ist, Zähne (70) oder Verdickungen oder Rippen (64) enthält, die die Reibung zwischen der rotierenden Scheibe und der Wirbelschicht erhöhen.

7. Vorrichtung nach Anspruch 6, **dadurch gekennzeichnet, dass** die Zähne (70) oder Verdickungen oder Rippen (64) und/oder der Teil (63) der Fläche der rotierenden Scheibe ein solches Profil haben, dass sie die festen Teilchen in die gewünschte Längsrichtung schieben, wenn die rotierende Scheibe schneller dreht als die rotierende Wirbelschicht.

8. Vorrichtung nach einem der Ansprüche 1 bis 7, **dadurch gekennzeichnet, dass** sie ein zentrales Rohr (20.1) oder ein Rohr (20) in der Nähe der Mittelachse enthält, das es ermöglicht, eine Flüssigkeit (2.1) auf die Fläche der rotierenden Scheibe zu spritzen oder zu sprühen, und dass die rotierende Scheibe mindestens einen kreisförmigen Vorsprung (83) enthält, der sich auf der Fläche der rotierenden Scheibe in der freien zentralen Zone befindet, und der ein solches Profil aufweist, dass er unter der Wirkung der Zentrifugalkraft in der freien zentralen Zone Mikrotröpfchen der Flüssigkeit dispergiert, wenn die Vorrichtung in Betrieb ist.

9. Vorrichtung nach einem der Ansprüche 1 bis 8, **dadurch gekennzeichnet, dass** die rotierende Scheibe (1) an mindestens einer zweiten Scheibe (1.2) befestigt ist, die einen ringförmigen Raum zwischen den zwei rotierenden Scheiben begrenzt, und dass die zweite Scheibe (1.2) eine zentrale Öffnung (26) enthält, die die zentrale Ableitung von Fluiden (6.1), die durch den ringförmigen Raum gehen, und die zentrale Zufuhr von Flüssigkeiten (2.1) oder von Feststoffen (2) erlaubt, die ggf. von einem Fluid angetrieben werden oder in Lösung in einer Flüssigkeit sind, mit Hilfe eines Rohrs (20.1) oder (20) entlang oder in der Nähe der Mittelachse (11).

10. Vorrichtung nach einem der Ansprüche 1 bis 9, **dadurch gekennzeichnet, dass** die zentrale Ableitung der Fluide (6), die die rotierende Wirbelschicht durchquert haben, durch eine der Seitenflächen (14) hindurch erfolgt, und die rotierende Scheibe (1) sich in der Nähe der gegenüberliegenden Seitenfläche (13) befindet.

11. Vorrichtung nach einem der Ansprüche 1 bis 9, **dadurch gekennzeichnet, dass** die zentrale Ableitung der Fluide, die die rotierende Wirbelschicht durchquert haben, durch die zwei Seitenflächen (13) und (14) hindurch erfolgt, und dass die rotierende Scheibe (1) die kreisförmige Kammer in zwei kreisförmige Zonen teilt.

12. Vorrichtung nach Anspruch 11, **dadurch gekennzeichnet, dass** die rotierende Scheibe (1) Öffnungen (90) enthält, die sich in einem Abstand (42) von der kreisförmigen Wand (15) befinden, der kleiner ist als die gewünschte Dicke (31) der rotierenden Wirbelschicht, wenn die Vorrichtung in Betrieb ist, und dass die Öffnungen (90) ein solches Profil haben, dass sie den Transfer von festen Teilchen von einer ringförmigen Zone zur anderen in der gewünschten Richtung begünstigen, wenn die rotierende Scheibe schneller dreht als die rotierende Wirbelschicht.

13. Vorrichtung nach einem der Ansprüche 1 bis 12, **dadurch gekennzeichnet, dass** sie eine vertiefte rotierende Scheibe (1.3) und ein zentrales Rohr (20.2) enthält, das die Rotationswelle (10) durchquert, an der die vertiefte rotierende Scheibe befestigt ist, und es erlaubt, ein Fluid (2.2), das feste Teilchen antreiben oder gelöste oder schwebende Feststoffe enthalten kann, ins Innere der vertieften rotierenden Scheibe zuzuführen, und dass die vertiefte rotierende Scheibe (1.3) Öffnungen (89) entlang ihres Umfangs enthält, die es ermöglichen, das Fluid (2.2) in die gewünschte Richtung im Inneren der rotierende Wirbelschicht zu spritzen oder zu sprühen, wenn die Vorrichtung in Betrieb ist.

14. Verfahren zur katalytischen Polymerisation, zum Trocknen, zur Entnahme von flüchtigen Bestandteilen, zur Oberflächenbehandlung, zur Umhüllung, zur Imprägnierung, zum Rösten, zur Pyrolyse, zur Vergasung, zur Verfestigung oder anderen Umwandlung von festen oder flüssigen Teilchen in Lösung in einer rotierenden Wirbelschicht, oder zur katalytischen oder thermischen Umwandlung von Fluiden, die die rotierende Wirbelschicht durchqueren, unter Verwendung einer Vorrichtung nach einem der Ansprüche 1 bis 13, **dadurch gekennzeichnet, dass** die festen oder flüssigen Teilchen oder die Fluide eine Umwandlung erfahren, indem sie sich im Inneren der rotierenden Wirbelschicht kontaktieren, die von dieser Vorrichtung erzeugt wird.

15. Verfahren zur Umwandlung von mindestens zwei verschiedenen Fluiden und/oder Feststoffen nach Anspruch 14, **dadurch gekennzeichnet, dass** eine exotherme Reaktion in einer ringförmigen Zone der rotierenden Wirbelschicht eintritt, und eine endotherme Reaktion in einer anderen ringförmigen Zone der rotierenden Wirbelschicht eintritt, wobei die Zonen von den Fluiden durchquert werden und voneinander durch mindestens eine rotierende Scheibe dieser Vorrichtung getrennt sind.

16. Verfahren zur Umwandlung von mindestens zwei verschiedenen Fluiden nach Anspruch 15, **dadurch gekennzeichnet, dass** mindestens ein Teil der festen Teilchen Katalysatoren für eine der Umwandlungen der Fluide in einer ringförmigen Zone sind, und dass sie vom anderen Fluid in einer anderen ringförmigen Zone regeneriert werden.

17. Verfahren zur Verfestigung von Mikrotröpfchen nach Anspruch 14, **dadurch gekennzeichnet, dass** die Mikrotröpfchen durch die Zentrifugaldispersion eines Flüssigkeitsfilms erhalten werden, der auf eine rotierende Scheibe dieser Vorrichtung gespritzt oder gesprüht wird, und dass die Verfestigung durch die Verdampfung der Feststoffe in Lösung enthaltenden Flüssigkeit oder durch chemische oder thermische Reaktion in Kontakt mit Gas erhalten wird, das die rotierende Wirbelschicht in der Nähe der rotierenden Scheibe durchquert.

18. Verfahren nach einem der Ansprüche 14 bis 17, **dadurch gekennzeichnet, dass** es den Schritt enthält, der darin besteht, mindestens eines der Fluide zu recyceln.

## Claims

1. A device for obtaining a rotary fluidized bed within a fixed circular chamber delimited by a circular wall (15) and fixed lateral walls (13) and (14), comprising:
- a device (3) for injecting gaseous or liquid fluids via numerous injection openings (16) through said circular wall (15) in directions mainly at a tangent to said circular wall (15);
- a device (6) for centrally discharging fluids which have passed through the rotary fluidized bed through at least one central outlet opening (21.1) or (21.2) disposed around or in the vicinity of the central axis (11) of said circular chamber;
- a device for feeding solid particles into the interior of said circular chamber;
- a device for discharging solid particles from the circular chamber, comprising at least one outlet opening (30) located at a distance (31) from said circular wall that corresponds to the desired thickness of the rotary fluidized bed;
**characterized in that** it comprises:
- at least one rotary disk (1) the rotation axis of which is along or in the vicinity of the central axis (11) of said circular chamber and the outer rim (61) of which is at a distance (41) from said circular wall (15) that is less than the desired thickness (31) of said rotary fluidized bed when the device is in operation, and
- a device (12) for rotating said rotary disk (1) in the same direction as and more quickly than said rotary fluidized bed.

2. The device according to claim 1, **characterized in that** the square of the ratio between the surface area of the circular wall (15) and the sum of the surface areas of said injection openings (16) is greater than 200 times the ratio between the mean diameter of the circular chamber, D, and the mean diameter of the solid particles, d, multiplied by the ratio between the mean density of the fluid, pf, and the mean density of the solids, ps.

3. The device according to claim 1 or 2, **characterized in that** the mean distance (96) between said injection openings (16) is less than one twentieth of the mean diameter, D, of said circular chamber, and **in that** the hourly mass flow rate of the fluids passing through the rotary fluidized bed is greater than 200 times the mass of said rotary fluidized bed when the device is in operation.

4. The device according to any one of claims 1 to 3, **characterized in that** it comprises at least one tube (20) for feeding solids, optionally entrained by a fluid or in solution in a fluid (2), in the vicinity of the central axis (11), against the rotary disk (1).

5. The device according to claim 4, **characterized in that** the annular space (62) between the outer rim (61) of said rotary disk (1) and the circular wall (15) is passed through by gases (3.1) that are injected through said circular wall (15), and **in that** said tube (20) makes it possible to inject or spray onto the surface of said rotary disk (1) a liquid containing solids in solution, and **in that** the edge (60) of said surface at said outer rim (61) forms an acute and sharp angle.

6. The device according to any one of claims 1 to 5, **characterized in that** the outer rim (61) of the rotary disk or at least a part (63) of the surface of said rotary disk, which is in contact with the rotary fluidized bed when the device is in operation, comprises teeth (70) or protuberances or fins (64) which increase the friction between the rotary disk and the fluidized bed.

7. The device according to claim 6, **characterized in that** said teeth (70) or protuberances or fins (64) and/or said part (63) of the surface of the rotary disk are profiled so as to push the solid particles in the desired longitudinal direction when the rotary disk rotates more quickly than the rotary fluidized bed.

8. The device according to any one of claims 1 to 7, **characterized in that** it comprises a central tube (20.1), or a tube (20) in the vicinity of the central axis, for injecting or spraying a liquid (2.1) onto the surface of said rotary disk, and **in that** said rotary disk comprises at least one circular protrusion (83) which is located on said surface of said rotary disk, in the free central zone, and which is profiled so as to disperse microdroplets of said liquid under the effect of the centrifugal force, in said free central zone, when said device is in operation.

9. The device according to any one of claims 1 to 8, **characterized in that** said rotary disk (1) is fixed to at least one second disk (1.2), delimiting an annular space between the two rotary disks, and **in that** said second disk (1.2) comprises a central opening (26) for centrally discharging fluids (6.1) that pass through said annular space and for centrally feeding liquids (2.1) or solids (2) optionally entrained by a fluid or in solution in a liquid, with the aid of a tube (20.1) or (20) along or in the vicinity of the central axis (11).

10. The device according to any one of claims 1 to 9, **characterized in that** the central discharge of the fluids (6) which have passed through the rotary fluidized bed takes place through one of said lateral sides (14) and said rotary disk (1) is located in the vicinity of the opposite side (13).

11. The device according to any one of claims 1 to 9, **characterized in that** the central discharge of the fluids which have passed through the rotary fluidized bed takes place through the two lateral sides (13) and (14), and **in that** said rotary disk (1) divides said circular chamber into two circular zones.

12. The device according to claim 11, **characterized in that** said rotary disk (1) comprises openings (90) located at a distance (42) from the circular wall (15), that is less than the desired thickness (31) of said rotary fluidized bed when said device is in operation, and **in that** said openings (90) are profiled so as to encourage the transfer of solid particles from one annular zone to the other, in the desired direction, when said rotary disk rotates more quickly than said rotary fluidized bed.

13. The device according to any one of claims 1 to 12, **characterized in that** it comprises a hollow rotary disk (1.3) and a central tube (20.2), passing through the rotary shaft (10) to which said hollow rotary disk is fixed, for feeding a fluid (2.2) that can entrain solid particles or contain solids in solution or suspension into the interior of said hollow rotary disk, and **in that** said hollow rotary disk (1.3) comprises orifices (89) along its periphery for injecting or spraying said fluid (2.2) in the desired direction into the interior of said rotary fluidized bed when said device is in operation.

14. A process for the catalytic polymerization, drying, extraction of volatiles from, coating, impregnation, roasting, pyrolysis, gasification, solidification or other conversion of solid or liquid particles in suspension in a rotary fluidized bed or for the catalytic or thermal conversion of fluids passing through said rotary fluidized bed using a device according to any one of claims 1 to 13, **characterized in that** said solid or liquid particles or said fluids undergo conversion by coming into contact with one another within the rotary fluidized bed produced by this device.

15. The process for the conversion of at least two different fluids and/or of solids according to claim 14, **characterized in that** an exothermic reaction takes place in an annular zone of said rotary fluidized bed, and an endothermic reaction takes place in another annular zone of said rotary fluidized bed, said zones being passed through by said fluids and being separated from one another by at least one rotary disk of this device.

16. The process for the conversion of at least two different fluids according to claim 15, **characterized in that** at least some of said solid particles are catalysts for one of said conversions of one of said fluids in an annular zone and that they are regenerated by the other said fluid in another annular zone.

17. The process for the solidification of microdroplets according to claim 14, **characterized in that** the microdroplets are obtained by the centrifugal dispersion of a film of liquid injected or sprayed onto a rotary disk of this device, and **in that** the solidification is obtained by the evaporation of said liquid containing solids in solution or by chemical or thermal reaction in contact with gases passing through the rotary fluidized bed in the vicinity of said rotary disk.

18. The process according to any one of claims 14 to 17, **characterized in that** it comprises the step which consists in recycling at least one of said fluids.
